# EUROPEAN PATENT APPLICATION

(11) **EP 1 887 558 A1**
(43) Date of publication of application: **13.02.2008**
(21) Application number: 06746966.8
(22) Date of filing: 29.05.2006
(51) Int. Cl.: G10K 15/02

(54) **DATA PROCESSOR**

(30) Priority: 31.05.2005 JP 2005159718
(71) Applicant: MATSUSHITA ELECTRIC INDUSTRIAL CO., LTD., Osaka 571-8501 (JP)
(72) Inventor: TAKAHASHI, Masaki Panasonic Mobile Communications Co., Ltd., Kanagawa 224-8539 (JP); TAKAHASHI, Eiji Panasonic Mobile Communications Co., Ltd., Kanagawa 224-8539 (JP)
(74) Representative: Zimmer, Franz-Josef
(86) International application number: PCT/JP2006/310688
(87) International publication number: WO 2006/129614

(57) **Abstract**

A data processor by means of which when the right of a content being automatically reproduced extinguishes, the reproduction is continued so as to prevent the user from feeling discomfort, the content reproduction information is recorded and transmitted to a content distributor, and the user is charged. In the data processor, when a control unit (101) receives a message of a reproduction time limit expiration such as a reproduction time expiration or a reproduction time expiration date from a clock section (108) during reproduction of music data in an automatic reproduction mode, the control unit (101) continues the reproduction of the music data. The control unit (101) starts recording transmission information to transmit the reproduction information on the music data the reproduction of which has been continued to the music data distributor, or a content provider and sends a present time (reproduction start time) acquisition request and a reproduction time count start request to the clock section (108).

## Description

### Technical Field

The present invention relates to a data processing apparatus. More particularly, the present invention relates to a data processing apparatus which processes content with rights.

### Background Art

With the recent improvement in performance of a network environment such as the Internet, digital content including digital data such as images and speech is widely circulated, and content management such as copyright protection of digital content is becoming an important issue accordingly.

Conventionally, as a method of preventing illegal copying or distribution of digital content provided through a communication channel or a recording medium, a method is proposed of restricting playback of content by adding to the content, right data in which playback restriction information such as the number of playbacks, validity date and total playback duration of the content is set.

According to this content management method, when content is played back using a mobile information terminal apparatus such as a mobile telephone and portable music player which stores content through a communication channel or a recording medium, the playback of the content is restricted based on playback restriction information set in the right data. For example, if the number of playbacks is set in the playback restriction information, the playback of the content becomes impossible when the number of playbacks is exceeded. Furthermore, if a validity date and total playback duration are set in the playback restriction information, the playback of the content is immediately stopped even during the playback of the content when the validity date expires or total playback duration is exceeded.

Playback modes for playing back content with right data as described above include a user playback mode in which the user arbitrarily plays back stored content by operating a mobile information terminal apparatus, and an automatic playback mode for automatically playing back content stored in a mobile information terminal apparatus based on a preset specific playback condition. For example, as for playback conditions under which a mobile telephone plays back content based on the automatic playback mode, by specifying content to be played back from among stored content with right data when a schedule, ringtone, alarm time and the like are set, the specified content is automatically played back under each set playback condition.

However, when content with right data is played back based on the automatic playback mode, and when the right for the content specified under the playback conditions expires by the above-described playback restriction information and the playback becomes impossible, the specified content would not be played back even if the playback conditions such as the schedule, incoming call and alarm time are met. This results in a problem that the user cannot further recognize the schedule, incoming call and alarm time. That is, the conventional content management method does not take the automatic playback mode into consideration, and therefore such a situation occurs.

Thus, as a content management method taking an automatic playback mode into consideration, there is a content management method proposed in, for example, Patent Document 1. According to this Patent Document 1, if the right for specified melody data expires before starting an automatic playback, default melody data stored beforehand in a mobile telephone, for which no right is set, is played back.
Patent Document 1: Japanese Patent Application Laid-Open No.2001-223766

### Disclosure of Invention

### Problems to be Solved by the Invention

However, in the conventional automatic playback mode of Patent Document 1, if the right for the specified melody data expires before starting an automatic playback, the default melody data stored beforehand in the mobile telephone, for which no right is set, is played back, but the melody which is not specified by the user, is played back, and therefore it is not possible to solve the above-described problem that the playback conditions cannot be recognized.

On the other hand, although there can also be a method of continuing a playback when the right for content expires during an automatic playback, this is not desirable from the standpoint of protection of the copyright of the content.

It is therefore an object of the present invention to provide a data processing apparatus that makes it possible to, when the right for content expires during an automatic playback, prevent the user from feeling a sense of incongruity by continuing the playback, and allow the content provider to bill the user by recording playback information of the content for which the right expires, and transmitting the playback information to the content provider.

### Means for Solving the Problem

The data processing apparatus according to the present invention that performs processing on data including right data relating to content, adopts a configuration including: a storage section that stores content distributed from a provider and right data including playback restriction information corresponding to the content; a playback section that performs playback processing of the stored content; a right management section that manages the playback restriction information in association with validity or invalidity information of the right data; a control section that decides whether the right data corresponding to the content is valid or invalid at the right management section upon a content playback request, controls playback processing of the playback section and records the playback information of the content after the right data decision; and a communication section that transmits the playback information to the provider.

### Advantageous Effect of the Invention

According to the present invention, it is possible to, when the right for content becomes invalid before starting a playback or during a playback, prevent the user from feeling a sense of incongruity by continuing the playback, and allow a content provider to bill the user by recording playback information of the content for which the right expires, and transmitting the playback information to the content provider.

### Brief Description of Drawings

FIG.1 is a block diagram showing the configuration of a mobile telephone according to an embodiment of the present invention;
FIG.2 shows an example of a music right management table according to this embodiment;
FIG.3 shows an example of a storage table according to this embodiment;
FIG.4 is a flowchart illustrating a partial operation when music data for which playback duration is restricted, is played back in a user playback mode according to this embodiment;
FIG.5 is a flowchart illustrating an operation that follows FIG.4 according to this embodiment;
FIG.6 is a flowchart illustrating an operation that follows FIG.5 according to this embodiment;
FIG.7 is a flowchart illustrating a partial operation when music data for which a validity date is set, is played back in a user playback mode according to this embodiment;
FIG.8 is a flowchart illustrating an operation that follows FIG.7 according to this embodiment;
FIG.9 is a flowchart illustrating an operation that follows FIG.8 according to this embodiment;
FIG.10 is a flowchart illustrating a partial operation when music data for which the number of playbacks is restricted, is played back in a user playback mode according to this embodiment;
FIG. 11 is a flowchart illustrating an operation that follows FIG.10 according to this embodiment;
FIG. 12 is a flowchart illustrating an operation when music data without any valid right is played back in a user playback mode according to this embodiment;
FIG.13 is a flowchart illustrating a partial operation when music data for which playback duration is restricted, is played back in an automatic playback mode according to this embodiment;
FIG.14 is a flowchart illustrating an operation that follows FIG.13 according to this embodiment;
FIG. 15 is a flowchart illustrating an operation that follows FIG.14 according to this embodiment;
FIG. 16 is a flowchart illustrating an operation that follows FIG.15 according to this embodiment;
FIG.17 is a flowchart illustrating a partial operation when music data for which a validity date is set, is played back in an automatic playback mode according to this embodiment;
FIG.18 is a flowchart illustrating an operation that follows FIG.17 according to this embodiment;
FIG. 19 is a flowchart illustrating an operation that follows FIG.18 according to this embodiment;
FIG.20 is a flowchart illustrating an operation that follows FIG.19 according to this embodiment;
FIG.21 is a flowchart illustrating an operation that follows FIG.20 according to this embodiment;
FIG.22 is a flowchart illustrating a partial operation when music data for which the number of playbacks is set, is played back in an automatic playback mode according to this embodiment;
FIG. 23 is a flowchart illustrating an operation that follows FIG.22 according to this embodiment;
FIG.24 is a flowchart illustrating an operation that follows FIG.23 according to this embodiment;
FIG.25 is a flowchart illustrating an operation that follows FIG.24 according to this embodiment;
FIG.26 is a flowchart illustrating a partial operation whenmusic data without any valid right is played back in an automatic playback mode according to this embodiment;
FIG.27 is a flowchart illustrating an operation that follows FIG.26 according to this embodiment; and
FIG.28 is a flowchart illustrating an operation that follows FIG.27 according to this embodiment.

### Best Mode for Carrying Out the Invention

Hereinafter, an embodiment of the present invention will be explained in detail with reference to the attached drawings.

The definition of content commonly applicable to the embodiment described below is data such as characters, speech, images, video, map converted into electronic formats, games and software and the like and combinations of these. Furthermore, a case will be described with the following embodiment where music data with right data is played back using a mobile telephone as a mobile information terminal apparatus.

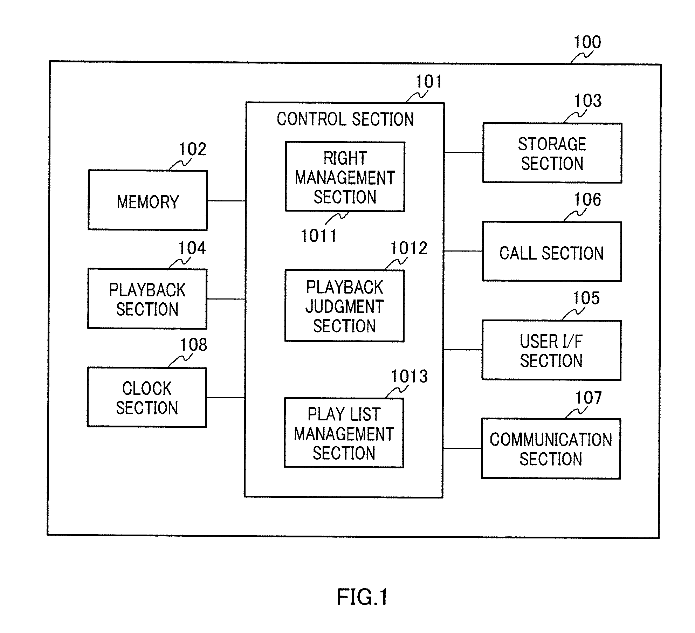

FIG.1 is a block diagram showing a schematic configuration of a mobile telephone applied to this embodiment. In FIG.1, mobile telephone 100 has control section 101, memory 102, storage section 103, playback section 104, user I/F section 105, call section 106, communication section 107 and clock section 108.

Control section 101 has right management section 1011, playback judgment section 1012 and play list management section 1013. Control section 101 has amobile telephone control function for controlling a mobile telephone function based on a mobile telephone control program stored in memory 102, a data communication control function for controlling data communication for downloading right data together with content from a content distribution site run by a content provider, based on a data communication control program stored in memory 102, and a playback control function for controlling a playback of the music data with the right data which is stored in storage section 103, based on a music playback control program stored in memory 102.

In playback control, control section 101 acquires playback mode information (user playback information or automatic playback information) from playback judgment section 1012, then acquires right ID corresponding to ID of the music to be played back from right management section 1011, receives the right data corresponding to the right ID from storage section 103 and requests right management section 1011 for a right decision (valid or invalid) of the right data. When the right decision result shows that the right data is valid, control section 101 receives the music data corresponding to ID of the music to be played back from storage section 103 and starts a playback at playback section 104.

Furthermore, when control section 101 acquires a report of expiration of the playback duration, validity date or the number of playbacks, from clock section 108 during a playback of music data in a user playback mode, control section 101 requests playback section 104 to stop the playback. Furthermore, when control section 101 acquires an expiration report such as the expiration of the playback duration and the validity date, from clock section 108 during a playback of music data in an automatic playback mode, control section 101 continues the playback of the music data. To transmit playback information of the music data which is continuously played back, to the content provider of the music data, control section 101 then starts recording the transmission information, which is the playback information, and requests clock section 108 to acquire the current time (playback start time) and to start counting the playback duration.

Furthermore, after the playback of the music data which is continuously played back stops, control section 101 requests clock section 108 to acquire the current time (playback end time), to stop counting the playback duration and to acquire the playback duration. Control section 101 then sets the playback start and end time and the playback duration acquired from clock section 108 and the encrypted user information, in the recorded transmission information, and transmits the information to the content provider through communication section 107. Furthermore, control section 101 requests right management section 1011 and storage section 103 to update the right data (playback information) of corresponding music ID after the music playback stops.

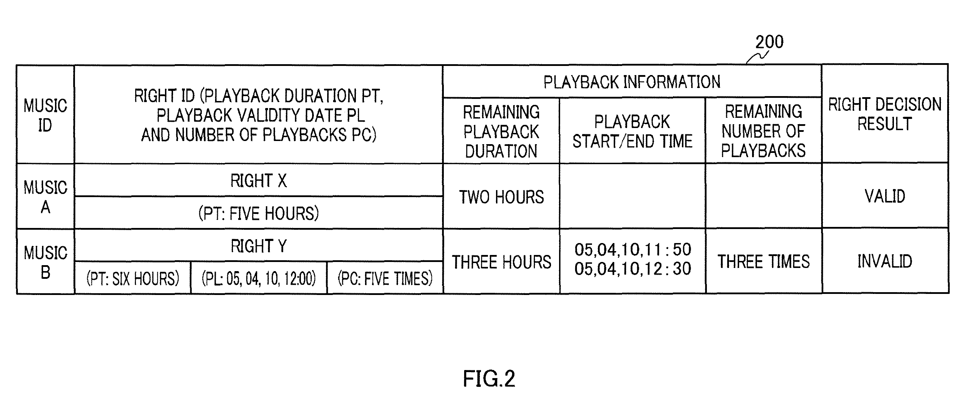

Right management section 1011 manages a music right management table which stores the correspondence between IDs (identification information) of the music data and the right data stored in storage section 103, decides invalidity or validity of the right data of the music data to be played back and reports the decision result to control section 101. FIG.2 shows an example of the music right management table. In FIG.2, music right management table 200 stores music ID in association with right ID including playback restriction information (playback duration PT, playback validity date PL and the number of playbacks PC), playback information corresponding to playback restriction information (remaining playback duration, playback end time and the remaining number of playbacks) and right decision result (valid or invalid).

Upon receiving a music data playback request inputted from user I/F section 105, playback judgment section 1012 judges whether the playback mode is a user playback mode or an automatic playback mode, and reports the judgment result to control section 101 as playback mode information.

Play list management section 1013 manages a play list which sets a playback order of a plurality of pieces of music data stored in storage section 103 by using music IDs, and reports music IDs to control section 101 so as to play back music data according to the order set in the play list when playing back the play list at playback section 104. A playback order such as a user-specified playback order of the music data and a default playback order specified beforehand, is set in the play list.

Memory 102 stores a mobile communication control program, data communication control program and music playback control program executed at control section 101. Furthermore, memory 102 stores the music right management table which stores IDs (data identification information) of the music data stored in storage section 103 in association with IDs (right identification information) of the right data.

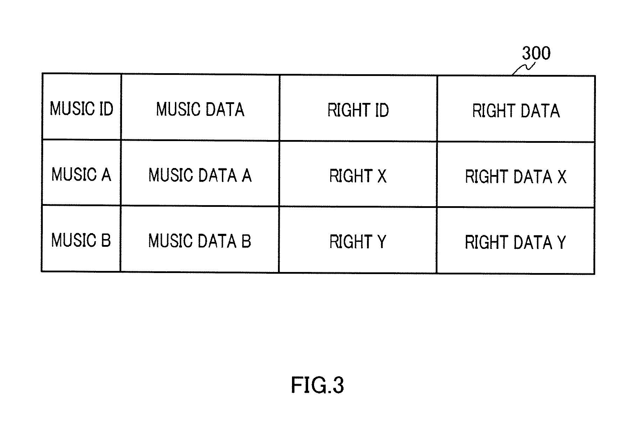

Storage section 103 stores the music data (content) and the music ID received from a content distribution server (not shown) operated by the content provider in association with the right data and right ID corresponding to the music data, in storage table 300 shown in FIG.3. The right data includes playback restriction information set by the content provider in complying with the intention of the owner of copyright of the music data. The number of playbacks (for example, up to five times), validity date (for example, until 24 o'clock, April 31, 2005) and total playback duration (for example, up to a total of ten hours) and the like are set in the playback restriction information to restrict the playback of the music data. The playback restriction information is managed by right management section 1011 together with right ID in music right management table 200 in FIG.2.

Playback section 104 plays back the music data which is read and inputted by control section 101 from storage section 103. User I/F section 105 has various operation keys relating to the mobile telephone, operation keys relating to music playback and the like, and outputs an operation signal according to the key operation by the user, to control section 101.

Call section 106 has a telephone control function for executing a speech call protocol with a radio base station connected to a mobile telephone network, connects a call with a call destination communication terminal in response to an incoming call from the radio base station, receives a reception speech signal, outputs the signal to control section 101 and also transmits a transmission speech signal inputted from control section 101, to the radio base station.

Communication section 107 has a data communication control function for executing a data communication protocol with a data communication network such as the Internet through the radio base station connected to the mobile telephone network, and controls data transmission to and reception from a data communication terminal connected to the data communication network.

Clock section 108 manages a clock function, alarm function and schedule function, and reports to control section 101 when a specified time set in the alarm or the schedule comes. Upon receiving the report of the specified time from clock section 108, control section 101 starts or ends music data playback processing. Furthermore, clock section 108 receives remaining playback duration information from control section 101 during a playback of music data, times remaining playback duration, and reports the expiration of the playback duration to control section 101 when the remaining playback duration of the music data during the playback becomes "0."

Next, the music data playback operation in a user playback mode executed at mobile telephone 100 in FIG. 1 will be explained below. A case will be explained with the following music data playback operation where playback duration is set in the right data corresponding to the music data as a playback condition.

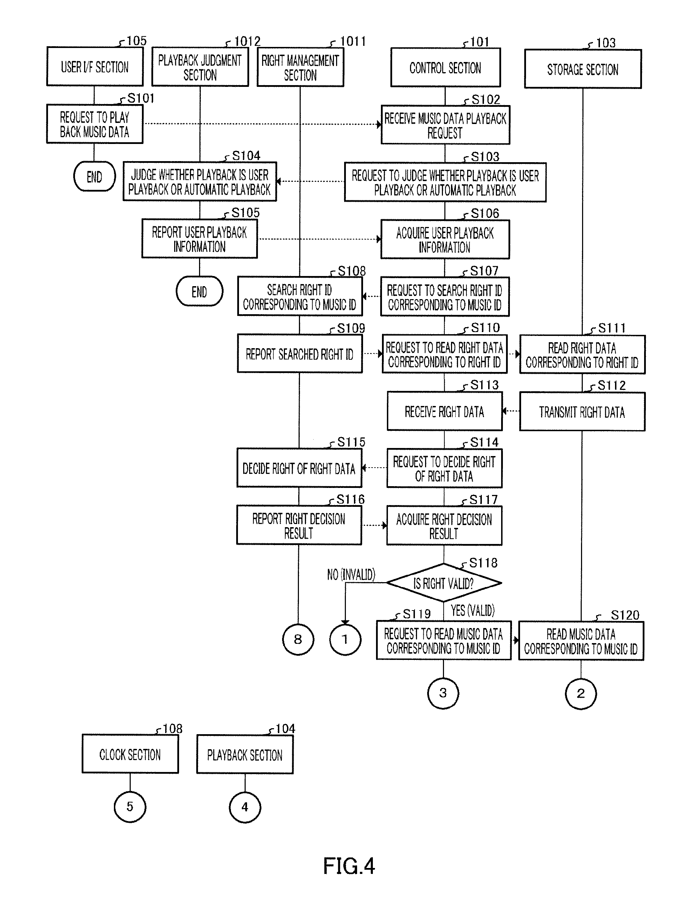

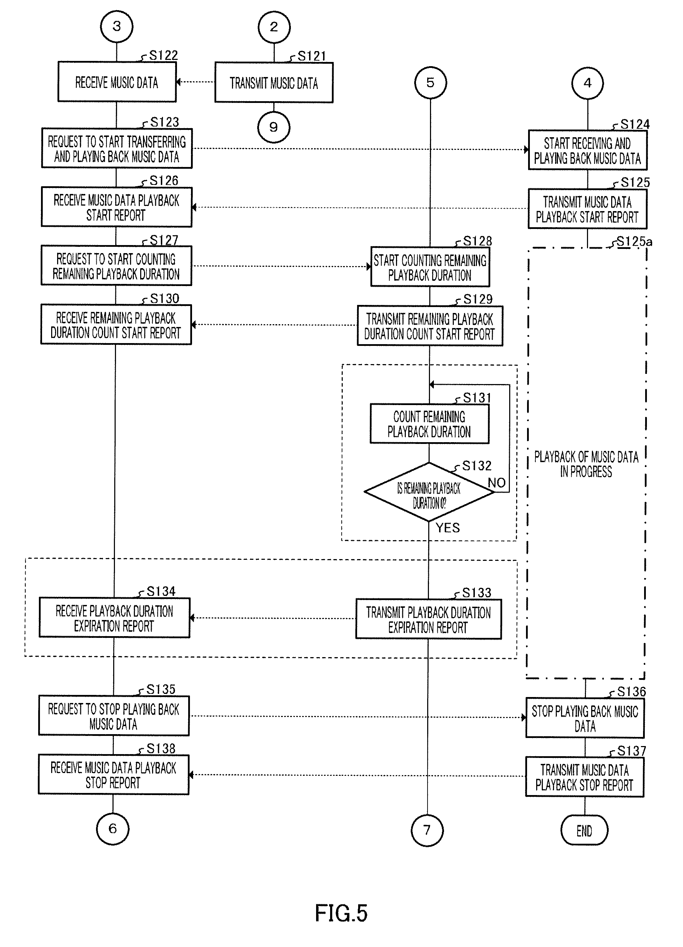

First, the operation of mobile telephone 100 when the stored music data for which playback duration is set as the playback restriction information, is played back based on the user playback mode, will be explained with reference to the flowcharts shown in FIG.4 to FIG.6. FIG.4 to FIG.6 are the flowcharts which show associated operations of the respective sections in mobile telephone 100 in the user playback mode. A case will be explained with these operations where the user selects a playback of music A in FIG.2. Although the flowcharts shown in FIG.4 to FIG. 6 show operations of the respective sections as a series of operations, these flowcharts also include different playback stop operations (in the case of expiration of the remaining playback duration and in the case of playback stop instruction) which are not a series of operations.

In FIG.4, first, when an instruction of selecting music ID and a playback request instruction are inputted by the user through the operation of user I/F section 105, user I/F section 105 outputs a music data playback request signal including selected music ID (music A) to control section 101 (step S101). Upon receiving the music data playback request signal (step S102), control section 101 reports a request to judge whether the playback is user playback or automatic playback, including the received music data playback request signal, to playback judgment section 1012 (step S103).

Upon acquiring the request to judge whether the playback is user playback or automatic playback, playback judgment section 1012 judges that the mode is a user playback mode or an automatic playback mode based on the music data playback request signal included in the judgment request (step S104). In this case, the music data playback request signal is inputted from user I/F section 105, and therefore playback judgment section 1012 judges that the mode is a user playback mode, and reports user playback information to control section 101 (step S105).

Upon acquiring the user playback information (step S106), control section 101 recognizes that the mode is a user playback mode. Next, control section 101 reports a request to search right ID corresponding to music ID (music A) selected upon reception of the music data playback request in step S102, to right management section 1011 (step S107). Upon acquiring the request to search right ID corresponding to music ID (music A), right management section 1011 searches right ID corresponding to music ID (music A) from music right management table 200 in FIG.2 (step S108), and transmits searched right ID (right X) to control section 101 (step S109).

Upon acquiring right ID (right X), control section 101 reports a request to read the right data corresponding to right ID (right X) to storage section 103 (step S110). Upon acquiring the request to read the right data corresponding to right ID (right X), storage section 103 reads right data X corresponding to right ID (right X) from storage table 300 (step S111), and transmits read right data X to control section 101 (step S112). Upon receiving right data X (step S113), control section 101 reports a request to decide right X to right management section 1011 (step S114).

Upon acquiring the request to decide right X, right management section 1011 decides whether right X is valid or invalid (step S115) with reference to music right management table in FIG.2, and transmits the right decision result (valid or invalid) to control section 101 (step S116). At this time, right management section 1011 reports to control section 101 the right decision result to which the playback restriction information (PT: five hours) of right X and playback information (remaining playback duration) in music right management table 200 are added.

Upon acquiring the right decision result (valid or invalid) including the playback restriction information and playback information (step S117), control section 101 decides whether the right for the music data to be played back is valid or invalid (step S118). At this time, control section 101 temporarily stores the playback restriction information and the playback information added to the right decision result, in a built-in buffer memory (not shown).

When the right is decided to be invalid (step S118: NO), control section 101 stops the playback processing of this time, and, when the right is decided to be valid (step S118: YES), control section 101 reports a request to read the music data corresponding to selected music A to storage section 103 (step S119).

Upon acquiring the request to read the music data corresponding to music A, storage section 103 reads music data A corresponding to music A from storage table 300 (step S120), and transmits music data A to control section 101 (step S121). Upon receiving music data A (step S122), control section 101 transfers music data A to playback section 104 and also reports a playback start request to playback section 104 (step S123).

Upon receiving music data A and acquiring the playback start request (step S124), playback section 104 transmits a music data A playback start report to control section 101 (step S125). Hereinafter, playback section 104 starts a playback of music data A and enters a state of "playback of music data in progress" (step S125a).

Upon receiving the playback start report (step S126), control section 101 reads the remaining playback duration, which is the playback information stored in the buffer memory, transfers the remaining playback duration information to clock section 108 and also requests clock section 108 to start counting remaining playback duration (step S127). Upon receiving the remaining playback duration information and acquiring the remaining playback duration count start request, clock section 108 starts counting the remaining playback duration (step S128), and transmits a remaining playback duration count start report to control section 101 (step S129). Control section 101 receives the remaining playback duration count start report (step S130). Then, clock section 108 continues the remaining playback duration count start processing until the playback of music data A is stopped or the remaining playback duration becomes 0 (steps S131 and S132).

When the remaining playback duration becomes 0 (step S132: YES), clock section 108 transmits a playback duration expiration report to control section 101 (step S133). Upon receiving the playback duration expiration report (step S134), control section 101 requests playback section 104 to stop the playback of music data A (step S135). In response to the playback stop request, playback section 104 stops the playback of music data A (step S136), and transmits a music data playback stop report to control section 101 (step S137). Control section 101 receives the music data playback stop report (step S138).

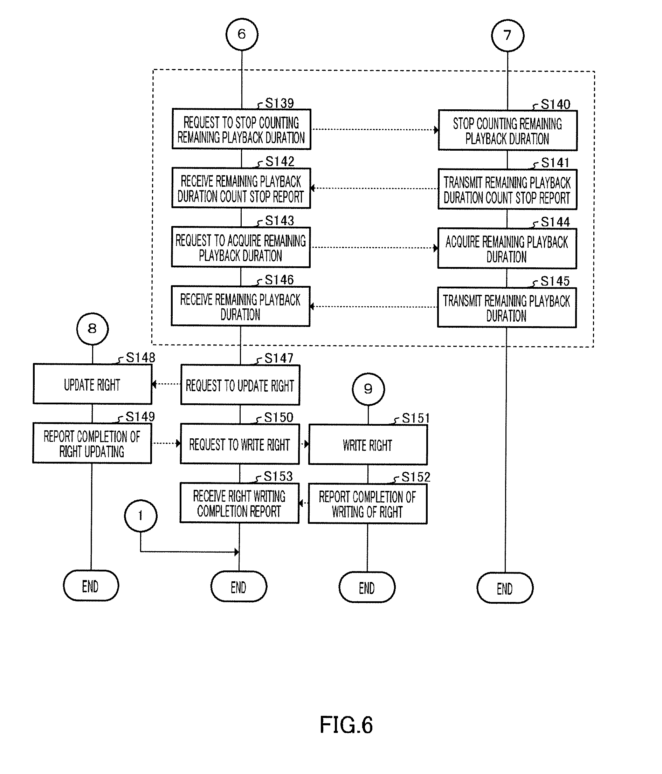

The above-described processings in step S131 to step S138 are a playback stop operation when the remaining playback duration expires during the playback of music data A. Next, a playback stop operation other than the expiration of the playback duration will be explained with reference to step S139 to step S146 shown in FIG.6. In this case, it is assumed that the processings in step S135 to step S138 are performed between control section 101 and playback section 104 and the playback of music data A is stopped according to the music playback stop instruction from user I/F section 105.

In FIG.6, upon receiving, for example, a music playback stop instruction as input from user I/F section 105, control section 101 requests clock section 108 to stop counting the remaining playback duration (step S139). Clock section 108 stops counting the playback duration in response to the remaining playback duration count stop request (step S140), and transmits a remaining playback duration count stop report to control section 101 (step S141).

Upon receiving the remaining playback duration count stop report (step S142), control section 101 requests clock section 108 to acquire the remaining playback duration (step S143). Upon acquiring the remaining playback duration acquisition request (step S144), clock section 108 transmits the remaining playback duration information after counting is stopped, to control section 101 (step S145). Control section 101 receives the remaining playback duration information (step S146).

The above-described processings in step S139 to step S146 are a playback stop operation other than the expiration of the playback duration of music data A.

Next, after the above-described processings in step S138 or step S146, control section 101 transmits a remaining playback duration information updating request and right X to right management section 1011 (step S147). Upon receiving the remaining playback duration information updating request and right X, right management section 1011 updates the remaining playback duration information of right X in music right management table 200 (step S148). Right management section 1011 transmits a right X updating completion report to control section 101 (step S149).

Next, upon receiving the right X updating completion report, control section 101 transmits a right X writing request to storage section 103 (step S150). Upon receiving the right X writing request, storage section 103 writes right data X into storage table 300 (step S151), and transmits a right X writing completion report to control section 101 (step S152). Upon receiving the right X writing completion report (step S153), control section 101 ends this processing.

As described above, in the operation of playing back stored music data A based on the user playback mode, if it is proven that the right is invalid before starting a playback, the playback is stopped, and, also when a remaining duration expires during the playback of music data A, the playback of music data A is immediately stopped.

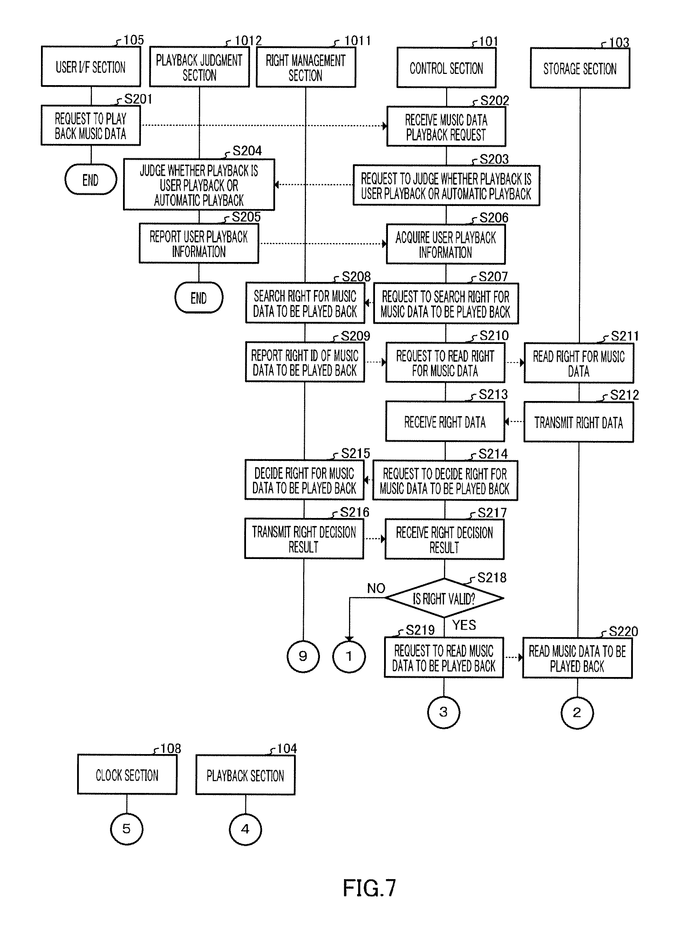

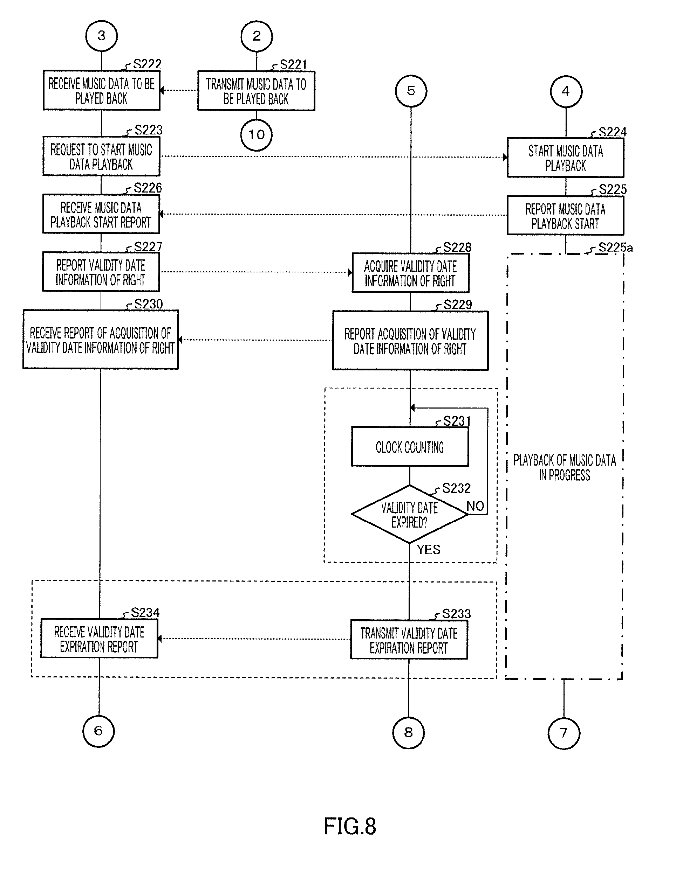

Next, the operation of mobile telephone 100 when the stored music data for which a validity date is set as playback restriction information, is played back based on the user playback mode, will be explained with reference to the flowcharts shown in FIG.7 to FIG.9. FIG.7 to FIG.9 are the flowcharts showing associated operations of the respective sections in mobile telephone 100 in the user playback mode. A case will be explained with these operations where the user selects a playback of music B in FIG.2. Although the flowcharts shown in FIG.7 to FIG.9 show operations of the respective sections as a series of operations, these flowcharts also include different playback stop operations (in the case of the expiration of the validity date and in the case of playback stop instruction) which are not a series of operations.

In FIG.7, when an instruction of selecting music ID and a playback request instruction are inputted by the user through the operation of user I/F section 105 first, user I/F section 105 outputs a music data playback request signal including selected music ID (music B) to control section 101 (step S201). Upon receiving the music data playback request signal (step S202), control section 101 reports a request to judge whether the playback is user playback or automatic playback, including the received music data playback request signal, to playback judgment section 1012 (step S203).

Upon acquiring the request to judge whether the playback is user playback or automatic playback, playback judgment section 1012 judges that the mode is a user playback mode or an automatic playback mode based on the music data playback request signal included in the judgment request (step S204). In this case, the music data playback request signal is inputted from user I/F section 105, and therefore playback judgment section 1012 decides that the mode is a user playback mode and reports user playback information to control section 101 (step S205).

Upon acquiring the user playback information (step S206), control section 101 recognizes that the mode is a user playback mode. Next, control section 101 reports a request to search right ID corresponding to music ID (music B) selected upon reception of the music data playback request in step S202, to right management section 1011 (step S207). Upon acquiring the request to search right ID corresponding to music ID (music B), right management section 1011 searches right ID corresponding to music ID (music B) from music right management table 200 in FIG.2 (step S208), and transmits searched right ID (right Y) to control section 101 (step S209).

Upon acquiring right ID (right Y), control section 101 reports a request to read the right data corresponding to right ID (right Y), to storage section 103 (step S210). Upon acquiring the request to read the right data corresponding to right ID (right Y), storage section 103 reads right data Y corresponding to right ID (right Y) from storage table 300 (step S211), and transmits read right data Y to control section 101 (step S212). Upon receiving right data Y (step S213), control section 101 reports a request to decide right Y to right management section 1011 (step S214).

Upon acquiring the request to decide right Y, right management section 1011 decides whether right Y is valid or invalid (step S215) with reference to music right management table 200 in FIG.2, and transmits the right decision result (valid or invalid) to control section 101 (step S216). At this time, right management section 1011 transmits to control section 101 the right decision result to which playback restriction information (PT: six hours, PL: 05, 04, 10, 12:00 and PC: five times) of right Y and playback information (remaining playback duration, playback start and end time and the remaining number of playbacks) in music right management table 200 are added.

Upon receiving the right decision result (valid or invalid) including the playback restriction information and the playback information (step S217), control section 101 decides whether the right for the music data to be played back is valid or invalid (step S218). At this time, control section 101 temporarily stores the playback restriction information and the playback information added to the right decision result in a built-in buffer memory (not shown).

When the right is decided to be invalid (step S218: NO), control section 101 stops the playback processing of this time, and, when the right is decided to be valid (step S218: YES), control section 101 reports a request to read the music data corresponding to selected music B, to storage section 103 (step S219).

Upon acquiring the request to read the music data corresponding to music B, storage section 103 reads music data B corresponding to music B from storage table 300 (step S220), and transmits music data B to control section 101 (step S221). Upon receiving music data B (step S222), control section 101 transfers music data B to playback section 104 and also reports a playback start request to playback section 104 (step S223).

Upon receiving music data B and acquiring the playback start request (step S224), playback section 104 transmits a music data B playback start report to control section 101 (step S225). Hereinafter, playback section 104 starts a playback of music data B and enters a state of "playback of music data in progress" (step S225a).

Upon receiving the playback start report (step S226), control section 101 reads the validity date (PL: 05, 04, 10, 12:00), which is the playback information stored in the buffer memory, and transmits the validity date information of right Y to clock section 108 (step S227). Upon receiving the validity date information of right Y (step S228), clock section 108 transmits a report of acquisition of the validity date information of right Y to control section 101 (step S229). Control section 101 receives the report of acquisition of the validity date information of right Y (step S230). Then, clock section 108 continues clock counting until the playback of music data B is stopped or the validity date expires (steps S231 and S232).

When the time counted by the clock has passed the date and time set in the validity date information and the validity date expires (step S232: YES), clock section 108 transmits a validity date expiration report to control section 101 (step S233). Upon receiving the validity date expiration report (step S234), control section 101 requests playback section 104 to stop the playback of music data B (step S235). In response to the playback stop request, playback section 104 stops the playback of music data B (step S236), and transmits a music data playback stop report to control section 101 (step S237). Control section 101 receives the music data playback stop report (step S238).

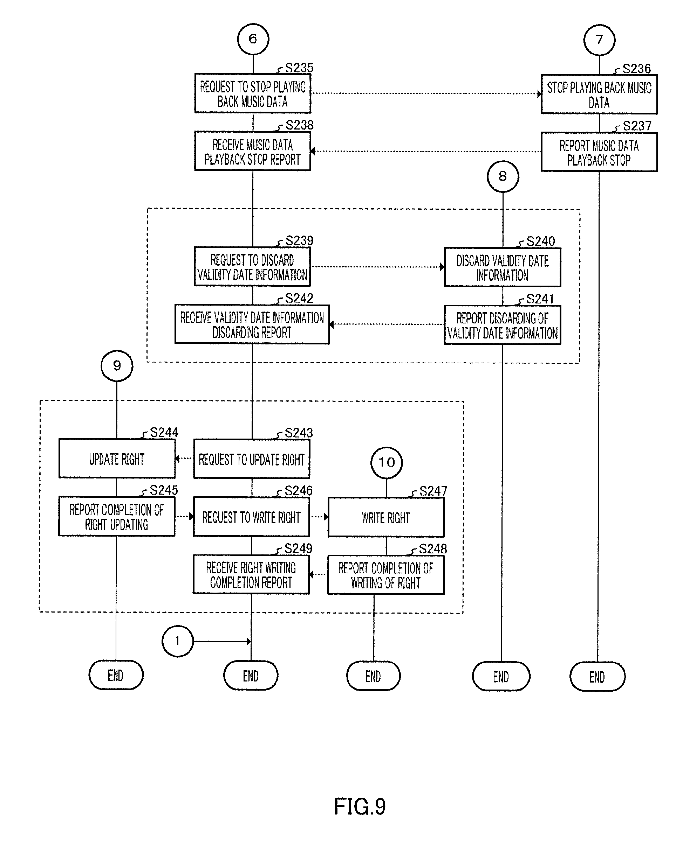

The above-described processings in step S231 to step S238 are a playback stop operation when the validity date expires during the playback of music data B. Next, a playback stop operation other than the expiration of the validity date will be explained with reference to step S239 to step S241 shown in FIG.9. In this case, it is assumed that the processings in step S235 to step S238 are performed between control section 101 and playback section 104 and the playback of music data B is stopped according to the music playback stop instruction from user I/F section 105.

In FIG.9, a request to discard validity date information is transmitted to clock section 108 (step S239). Upon receiving the request to discard validity date information, clock section 108 discards the validity date information (step S240), and transmits a validity date information discarding report to control section 101 (step S241). Control section 101 receives the validity date information discarding report (step S242).

The above-described processings in step S239 to step S242 are a playback stop operation other than the expiration of the validity date of music data B.

Next, the operation in the case of playback stop due to the expiration of the validity date will be explained with reference to the flowchart in and after step S243 shown in FIG.9. In this case, it is assumed that the playback of music data B is stopped through the above-described processings in step S233 to step S238 executed between control section 101 and playback section 104.

Next, control section 101 transmits information that the validity date expires and a right Y updating request to right management section 1011 (step S243). Upon receiving the information that the validity date expires and the right Y updating request, right management section 1011 updates the right decision result of right Y in music right management table 200 to "invalid" (step S244). Right management section 1011 transmits a right Y updating completion report to control section 101 (step S245).

Next, upon receiving the right Y updating completion report, control section 101 transmits a right Y writing request to storage section 103 (step S246). Upon receiving the right Y writing request, storage section 103 writes right data Y into storage table 300 (step S247), and transmits a right Y writing completion report to control section 101 (step S248). Upon receiving the right Y writing completion report (step S249), control section 101 ends this processing.

The above-describedprocessings in and after step S244 will be executed in the same way after the playback stop processing due to the expiration of the validity date shown in above step S231 to step S238.

As described above, in the operation of playing back stored music data B based on the user playback mode, if it is proven that the right is invalid, the playback is stopped, and, also when the validity date expires during the playback of music data B, the playback of music data B is immediately stopped.

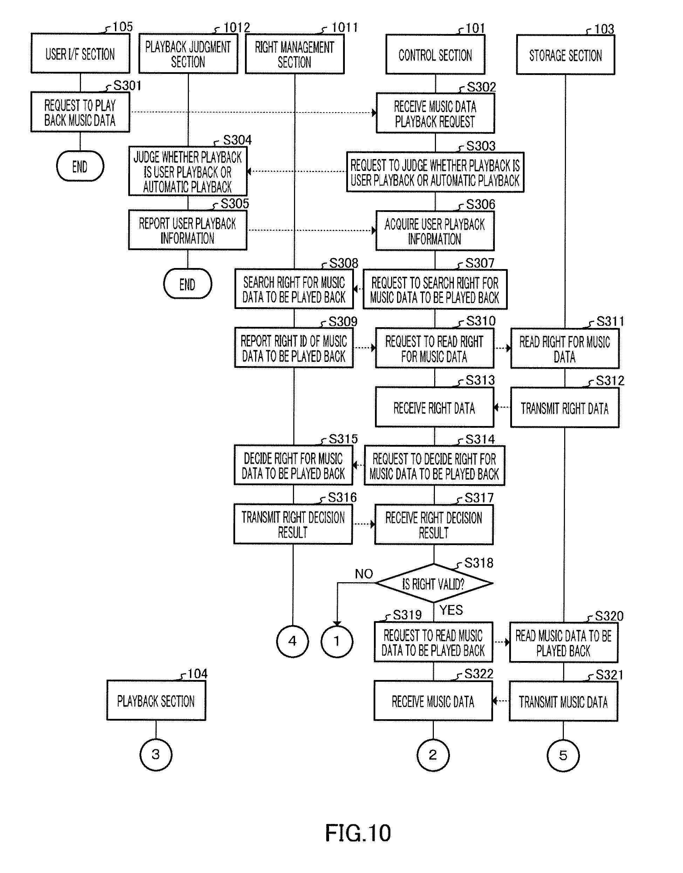

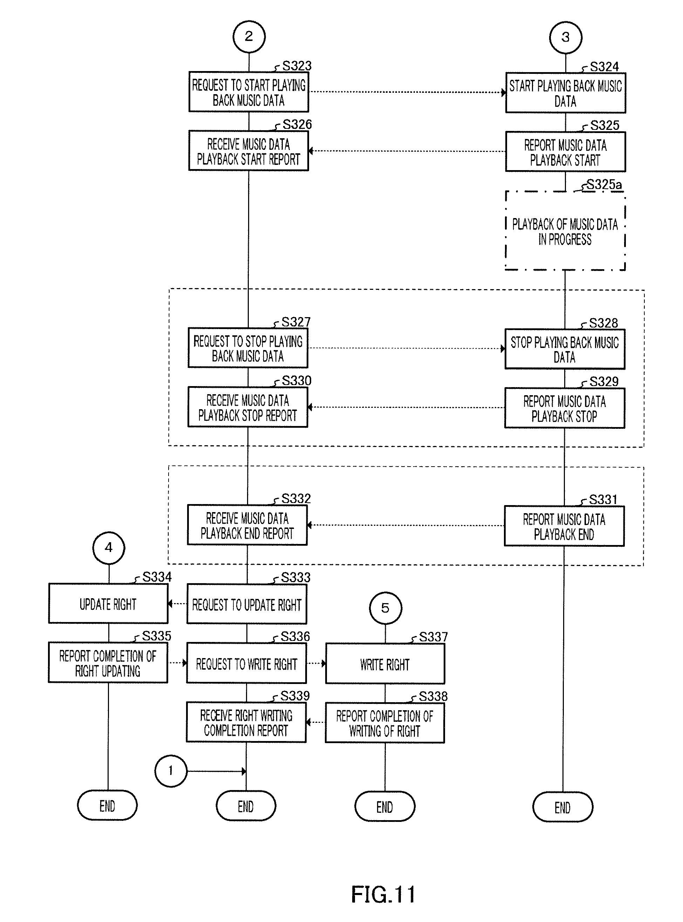

Next, the operation of mobile telephone 100 when the stored music data for which the number of playbacks is set as the playback restriction information, is played back based on the user playback mode, will be explained with reference to the flowcharts shown in FIG. 10 and FIG. 11. FIG.10 and FIG.11 are the flowcharts showing associated operations of the respective sections in mobile telephone 100 in the user playback mode. A case will be explained with these operations where the user selects a playback of music B in FIG.2. Although the flowcharts shown in FIG.10 and FIG.11 show operations of the respective sections as a series of operations, these flowcharts also include different playback stop operations (in the case of the expiration of the validity date and in the case of playback stop instruction) which are not a series of operations.

In FIG. 10, when an instruction of selecting music ID and a playback request instruction are inputted by the user through the operation of user I/F section 105 first, user I/F section 105 outputs a music data playback request signal including selected music ID (music B) to control section 101 (step S301). Upon receiving the music data playback request signal (step S302), control section 101 reports a request to judge whether the playback is user playback or automatic playback, including the received music data playback request signal, to playback judgment section 1012 (step S303).

Upon acquiring the request to judge whether the playback is user playback or automatic playback, playback judgment section 1012 judges that the mode is a user playback mode or an automatic playback mode based on the music data playback request signal included in the judgment request (step S304). In this case, the music data playback request signal is inputted from user I/F section 105, and therefore playback judgment section 1012 judges that the mode is a user playback mode, and reports user playback information to control section 101 (step S305).

Upon acquiring the user playback information (step S306), control section 101 recognizes that the mode is a user playback mode. Next, control section 101 reports a request to search right ID corresponding to music ID (music B) selected upon reception of the music data playback request in step S302, to right management section 1011 (step S307). Upon acquiring the request to search right ID corresponding to music ID (music B), right management section 1011 searches right ID corresponding to music ID (music B) from music right management table 200 in FIG.2 (step S308), and transmits searched right ID (right Y) to control section 101 (step S309).

Upon acquiring right ID (right Y), control section 101 reports a request to read right data corresponding to right ID (right Y) to storage section 103 (step S310). Upon acquiring the request to read the right data corresponding to right ID (right Y), storage section 103 reads right data Y corresponding to right ID (right Y) from storage table 300 (step S311), and transmits read right data Y to control section 101 (step S312). Upon receiving right data Y (step S313), control section 101 reports a request to decide right Y to right management section 1011 (step S314).

Upon acquiring the request to decide right Y, right management section 1011 decides whether right Y is valid or invalid (step S315) with reference to music right management table 200 in FIG.2, and transmits the right decision result (valid or invalid) to control section 101 (step S316). At this time, right management section 1011 transmits to control section 101 the right decision result to which the playback restriction information (PT: six hours, PL: 05, 04, 10, 12:00 and PC: five times) of right Y and playback information (remaining playback duration, playback start and end time and the remaining number of playbacks) in music right management table 200 are added.

Upon receiving the right decision result (valid or invalid) including the playback restriction information and the playback information (step S317), control section 101 decides whether the right for the music data to be played back is valid or invalid (step S318). At this time, control section 101 temporarily stores the playback restriction information and the playback information added to the right decision result in the built-in buffer memory (not shown).

When the right is decided to be invalid (step S318 : NO), control section 101 stops the playback processing of this time, and, when the right is decided to be valid (step S318: YES), control section 101 reports a request to read the music data corresponding to selected music B, to storage section 103 (step S319).

Upon acquiring the request to read the music data corresponding to music B, storage section 103 reads music data B corresponding to music B from storage table 300 (step S320), and transmits music data B to control section 101 (step S321). Upon receiving music data B (step S322), control section 101 transfers music data B to playback section 104 and also reports a playback start request to playback section 104 (step S323).

Upon receiving music data B and acquiring the playback start request (step S324), playback section 104 transmits a music data B playback start report to control section 101 (step S325). Hereinafter, playback section 104 starts a playback of music data B and enters a state of "playback of music data in progress" (step S325a). Control section 101 receives the music data B playback start report (step S326).

Next, the operation when the playback of music data is stopped in response to a request from control section 101, will be explained with reference to step S327 to step S330 shown in FIG.11.

Uponreceiving, for example, a music playback stop instruction from user I/F section 105, control section 101 transmits a music data playback stop request to playback section 104 (step S327). Upon receiving the music data playback stop request, playback section 104 stops the playback of music data B (step S328), and transmits a music data B playback stop report to control section 101 (step S329). Control section 101 receives the music data B playback stop report (step S330).

Next, the operation when the playback is stopped in response to a playback end of the music data, will be explained with reference to steps S331 and S332 shown in FIG.11.

After confirming the playback end of music data B, playback section 104 transmits a music data B playback end report to control section 101 (step S331). Control section 101 receives the music data B playback end report (step S332).

Next, the music data playback stop operation in response to the request from control section 101 shown in above step S327 to step S330, and the playback stop operation in response to the playback end of the music data and subsequent processings shown in steps S331 and S332, will be explained with reference to step S333 and subsequent steps shown in FIG.11.

After the above-described processing in step S330 or step S332, control section 101 transmits a request to update right Y including a request to subtract the number of playbacks, to right management section 1011 (step S333). Upon receiving the request to update right Y including the request to subtract the number of playbacks, right management section 1011 updates the remaining playback number information of right Y in music right management table 200 (step S334). Right management section 1011 transmits a right Y updating completion report to control section 101 (step S335).

Upon receiving the right Y updating completion report, control section 101 transmits a right Y writing request to storage section 103 (step S336). Upon receiving the right Y writing request, storage section 103 writes right data Y into storage table 300 (step S337), and transmits a right Y writing completion report to control section 101 (step S338). Upon receiving the right Y writing completion report (step S339), control section 101 ends this processing.

As described above, in the operation of playing back stored music data B based on the user playback mode, if it is proven that the right is invalid before starting the playback, the playback is stopped, and, if the playback of music data B is stopped or ends, the remaining number of playbacks of music data B is updated.

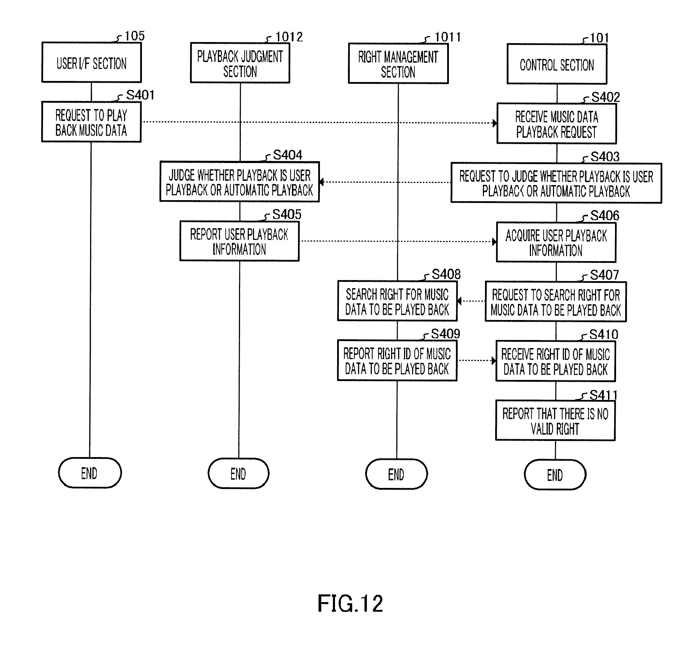

Next, the operation of mobile telephone 100 when the stored music data without valid right is played back based on the user playback mode, will be explained with reference to the flowchart shown in FIG.12. A case will be explained with this operation where the user selects a playback of music B in FIG.2 and the right for music B is invalid.

In FIG.12, when an instruction of selecting music ID and a playback request instruction are inputted by the user through the operation of user I/F section 105 first, user I/F section 105 outputs a music data playback request signal including selected music ID (music B), to control section 101 (step S401). Upon receiving the music data playback request signal (step S402), control section 101 reports a request to judge whether the playback is user playback or automatic playback, including the received music data playback request signal, to playback judgment section 1012 (step S403).

Upon acquiring the request to judge whether the playback is user playback or automatic playback, playback judgment section 1012 judges that the mode is a user playback mode or an automatic playback mode based on the music data playback request signal included in the judgment request (step S404). In this case, the music data playback request signal is inputted from user I/F section 105, and therefore playback judgment section 1012 judges that the mode is a user playback mode, and reports user playback information to control section 101 (step S405).

Upon acquiring the user playback information (step S406), control section 101 recognizes that the mode is a user playback mode. Next, control section 101 reports a request to search right ID corresponding to music ID (music B) selected upon reception of the music data playback request in step S402, to right management section 1011 (step S407). Upon acquiring the request to search right ID corresponding to music ID (music B), right management section 1011 searches right ID corresponding to music ID (music B) from music right management table 200 in FIG.2 (step S408), and transmits right ID (right Y) including the searched right decision result (invalid) to control section 101 (step S409).

Upon receiving right ID (right Y) including the right decision result (invalid) (step S410), control section 101 reports that there is no valid right to user I/F section 105 (step S411), and ends this processing.

As described above, when there is no valid right in the music data specified to be played back, the playback is refused.

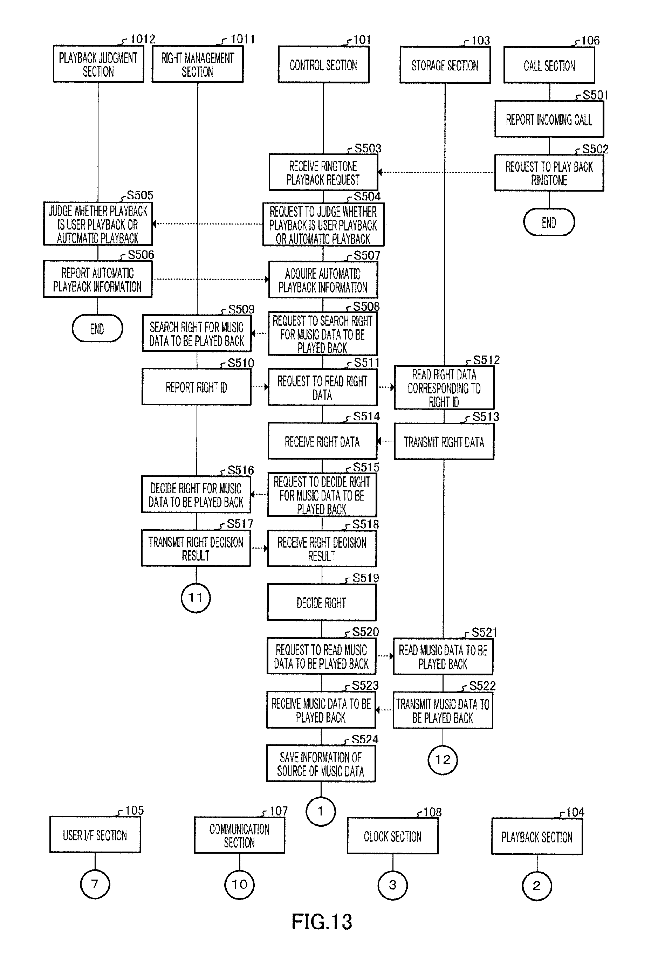

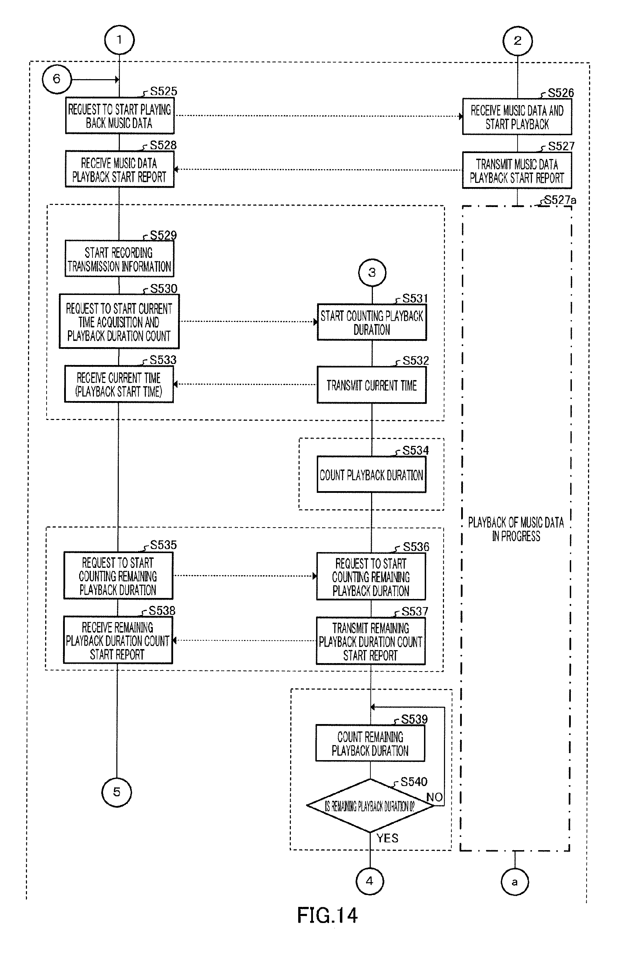

Next, the operation of mobile telephone 100 when the stored music data for which playback duration is set as the playback restriction information, is played back based on the automatic playback mode, will be explained with reference to flowcharts shown in FIG.13 to FIG.16. FIG.13 to FIG.16 are flowcharts showing associated operations of the respective sections in mobile telephone 100 in the automatic playback mode. A case will be explained with this operation where a playback of music A in FIG.2 is requested by an incoming call. Although the flowcharts shown in FIG.13 to FIG.16 show operations of the respective sections as a series of operations, these flowcharts also include different playback stop operations (when the right is invalid upon a right decision, after music data playback start is requested for the first time and when the right is valid upon a right decision, when the playback duration expires, when I/F section 105 receives an incoming call, when a playback duration expiration report is not received and the right is valid, and when recording of the transmission information is started) which are not a series of operations.

In FIG.13, upon receiving an incoming call report from the mobile telephone network first (step S501), call section 106 transmits a ringtone playback request including music ID (music A) to be played back, to control section 101 (step S502). Upon receiving the ringtone playback request including music ID (musicA) (step S503), control section 101 reports a request to judge whether the playback is user playback or automatic playback, including the received ringtone playback request, to playback judgment section 1012 (step S504).

Upon acquiring the request to judge whether the playback is user playback or automatic playback, playback judgment section 1012 judges that the mode is a user playback mode or an automatic playback mode based on the ringtone playback request included in the judgment request (step S505). In this case, it is a ringtone playback request, and therefore playback judgment section 1012 judges that the mode is an automatic playback mode, and reports automatic playback information to control section 101 (step S506).

Upon acquiring automatic playback information (step S507), control section 101 recognizes that the mode is an automatic playback mode. Next, control section 101 reports the request to search right ID corresponding to music ID (music A) specified upon reception of the ringtone playback request in step S503, to right management section 1011 (step S508). Upon acquiring the request to search right ID corresponding to music ID (music A), right management section 1011 searches right ID corresponding to music ID (music A) from music right management table 200 in FIG.2 (step S509), and transmits searched right ID (right X) to control section 101 (step S510).

Upon acquiring right ID (right X), control section 101 reports a request to read the right data corresponding to right ID (right X), to storage section 103 (step S511). Upon acquiring the request to read the right data corresponding to right ID (right X), storage section 103 reads right data X corresponding to right ID (right X) from storage table 300 (step S512), and transmits read right data X to control section 101 (step S513). Upon receiving right data X (step S514), control section 101 reports a request to decide right X, to right management section 1011 (step S515).

Upon acquiring the request to decide right X, right management section 1011 decides whether right X is valid or invalid (step S516) with reference to music right management table 200 in FIG.2, and transmits the right decision result (valid or invalid) to control section 101 (step S517). At this time, right management section 1011 transmits to control section 101 the right decision result to which the playback restriction information (PT: five hours) of right X and playback information (remaining playback duration) in music right management table 200 are added.

Upon receiving the right decision result (valid or invalid) including the playback restriction information and the playback information (step S518), control section 101 decides whether the right for the music data to be played back is valid or invalid (step S519). At this time, control section 101 temporarily stores the playback restriction information and the playback information added to the right decision result in a built-in buffer memory (not shown).

When the right is valid, control section 101 reports a request to read the music data corresponding to selected music A, to storage section 103 (step S520). Furthermore, even when the right is decided to be invalid upon the right decision, the flow proceeds to step S520, and control section 101 starts subsequent playback of music data. The detailed operation when the right is invalid upon the right decision will be described later.

Upon acquiring the request to read the music data corresponding to music A, storage section 103 reads music data A corresponding to music A from storage table 300 (step S521), and transmits music data A to control section 101 (step S522). Upon receiving music data A (step S523), control section 101 saves information of the source from which music data A is acquired, that is, address information of the content provider and the like, in the built-in buffer memory (not shown) (step S524).

Next, control section 101 transfers music data A to playback section 104 and also reports a playback start request to playback section 104 (step S525). The processings in step S525 to step S550 are the processings until a music data playback stop request is transmitted from control section 101. These processings include a processing when the right is invalid upon a right decision (step S529 to step S533), a processing after the music data playback start is requested for the first time and when the right is valid upon the right decision (step S535 to step S538), and a processing when playback duration expires (step S541 to step S547).

Upon receiving music data A and acquiring the playback start request (step S526), playback section 104 transmits a music data A playback start report to control section 101 (step S527). Hereinafter, playback section 104 starts a playback of music data A and enters a state of "playback of music data in progress" (step S527a). Control section 101 receives the music data A playback start report (step S528).

Next, the operation when the right is invalid upon the right decision in step S519 will be explained with reference to step S529 to step S533.

Even when the right is decided to be invalid upon the right decision in step S519, the playback of music data A is started by the above-described processings in step S520 to step S527, and the processings in step S529 to step S533 are executed after this playback start.

In this case, the playback of music data with an invalid right is started, and this violates the playback restriction set in the right data. Therefore, when starting a playback of the music data with an invalid right, mobile telephone 100 according to this embodiment records the playback start time, playback duration and playback end time, which will be described later, of the music data as the transmission information to be transmitted to the content provider. The content provider receives the transmission information from mobile telephone 100 and can thereby bill the user who plays back the music data with an expired right.

Control section 101 starts recording the transmission information (step S529), and transmits a current time acquisition and playback duration count start request to clock section 108 (step S530). Upon receiving the current time acquisition and playback duration count start request, clock section 108 starts playback duration count (step S531), and transmits the current time information to control section 101 (step S532). Upon receiving the current time information (step 5533), control section 101 stores the current time in the built-in buffer memory as the playback start time.

Through the above-described processings in step S529 to step S533, when starting a playback of music data with an invalid right, it is possible to store the playback start time and playback duration representing the playback status of the music data.

Clock section 108 executes a playback duration count until a playback duration count stop request is inputted in response to the playback stop of music data A (step S534).

Next, the playback processings after the music data playback start is requested for the first time and when the right is valid upon the right decision, that is, the processings when the playback of music data A specified by the ringtone playback request received in above step S503 is the first time and when the right is valid upon the right decision in step S519, will be explained with reference to step S535 to step S538.

In above step S519, control section 101 transfers the remaining playback duration information stored in the buffer memory, to clock section 108, and also transmits a remaining playback duration count request to clock section 108 (step S535). Upon receiving the remaining playback duration information and the remaining playback duration count request, clock section 108 starts counting the remaining playback duration (step S536), and transmits a remaining playback duration count start report to control section 101 (step S537). Control section 101 receives the remaining playback duration count start report (step S538).

Through the above-described processings in step S535 to step S538, in the case of playback processing after the music data playback start is requested for the first time and when the right is valid upon the right decision, it is possible to update the remaining playback duration of the music data.

Clock section 108 executes counting of the remaining playback duration until a playback stop is inputted from control section 101 or the remaining playback duration becomes 0 (steps S539 and S540).

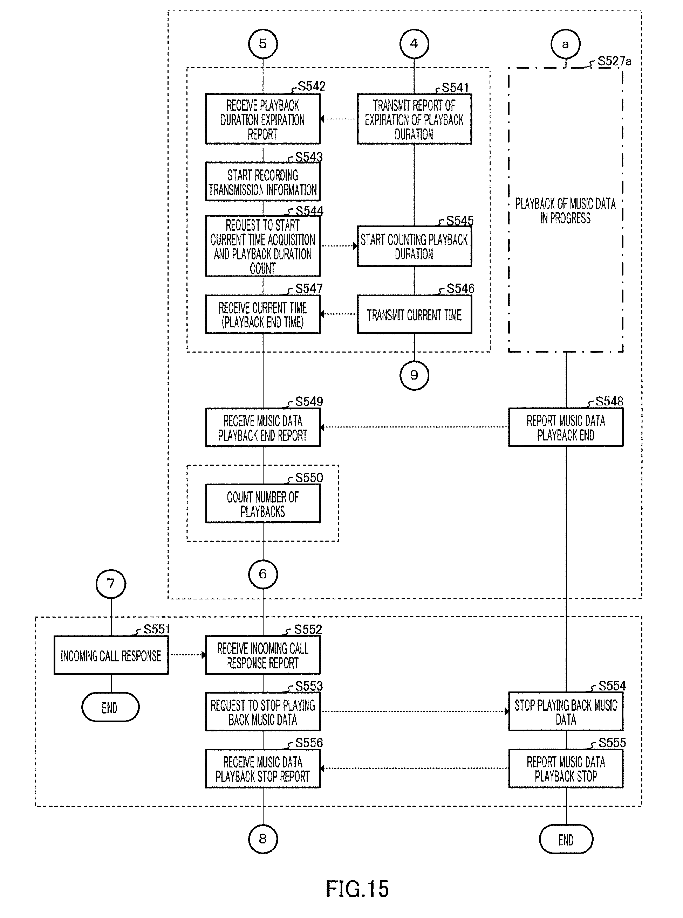

Next, the operation when clock section 108 reports that the remaining playback duration expires, will be explained with reference to step S541 to step S547 in FIG.15.

When the remaining playback duration becomes 0 through the above-described counting of the remaining playback duration, clock section 108 transmits a playback duration expiration report to control section 101 (step S541). Upon receiving the remaining playback duration expiration report (step S542), control section 101 starts recording of the above-described transmission information (step S543), and transmits a current time acquisition and playback duration count start request to clock section 108 (step S544). Upon receiving the current time acquisition and playback duration count start request, clock section 108 starts counting the playback duration (step S545), and transmits the current time information to control section 101 (step S546). Upon receiving the current time information (step S547), control section 101 stores the current time in the built-in buffer memory as the playback start time.

Through the above-described processings in step S542 to step S547, when the expiration of the remaining playback duration is reported, it is possible to record the playback duration of the music data during the playback even after the remaining playback duration expires.

Next, when the playback of music data A ends, playback section 104 transmits a music data A playback end report to control section 101 (step S548). Upon receiving the music data A playback end report (step S549), if recording of the transmission information is started, control section 101 increments by 1 the number of playbacks for the playback of this time (step S550), and the flow returns to step S525.

Next, the operation when the user receives an incoming call response at user I/F section 105 in response to the playback of a ringtone, will be explained with reference to step S551 to step S556.

When the user who hears a ringtone performs an incoming call response operation at user I/F section 105, user I/F section 105 transmits an incoming call response report to control section 101 (step S551). Upon receiving the incoming call response report (step S552), control section 101 transmits a music data A playback stop request to playback section 104 (step S553). Upon receiving the music data A playback stop request, playback section 104 stops the playback of music data A (step S554), and transmits a music data A playback stop report to control section 101 (step S555). Control section 101 receives the music data A playback stop report (step S556).

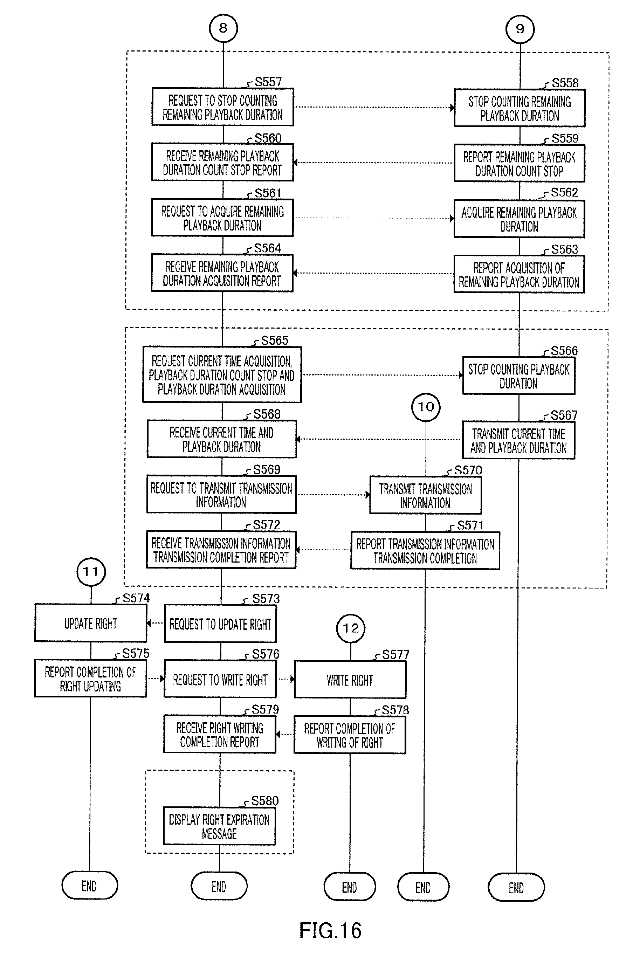

Next, the operation when a remaining playback duration expiration report is not received and the right is valid, will be explained with reference to step S557 to step S564 in FIG.16.

Control section 101 transmits a remaining playback duration count stop request to clock section 108 (step S557). Upon receiving the remaining playback duration count stop request, clock section 108 stops counting the remaining playback duration (step S558), and transmits a remaining playback duration count stop report to control section 101 (step S559). Upon receiving the remaining playback duration count stop report (step S560), control section 101 transmits a remaining playback duration acquisition request to clock section 108 (step S561). Upon receiving the remaining playback duration acquisition request (step S562), clock section 108 transmits remaining playback duration information after counting is stopped in step S558, to control section 101 (step S563). Control section 101 receives the remaining playback duration information (step S564).

Next, the operation when recording of the transmission information is started upon the above-described music data playback start, will be explained with reference to step S565 to step S572.

Control section 101 transmits a current time acquisition, playback duration count stop and playback duration acquisition request to clock section 108 (step S565). Upon receiving the current time acquisition, playback duration count stop and playback duration acquisition request, clock section 108 stops counting the playback duration (step S566), and transmits current time information and playback duration information to control section 101 (step S567). Upon receiving the current time information and playback duration information (step S568), control section 101 stores the playback duration information in the built-in buffer memory and also stores the current time in the built-in buffer memory as the playback end time.

Control section 101 then sets the playback start time, playback end time, playback duration and the number of playbacks stored in the buffer memory and the user information of mobile telephone 100, in the transmission information, and transmits a request to transmit the transmission information to the content provider, to communication section 107 (step S569). Upon receiving the transmission information and the request to transmit the transmission information to the content provider, communication section 107 transmits the transmission information to the content provider (step S570), and transmits a transmission information transmission completion report to control section 101 (step S571). Control section 101 receives the transmission information transmission completion report (step S572).

Through the above-described processings in step S565 to step S572, when the right is invalid upon the right decision or the playback duration expires, it is possible to transmit the playback start time, playback end time, playback duration and the number of playbacks which indicate a playback status of the music data, to the content provider. After receiving the transmission information, the content provider can bill the user on the music data played back after the right expires, based on the playback start time, playback end time, playback duration and the number of playbacks set in the transmission information and the user information.

Next, the operation in and after step S573 in FIG.16 will be explained.

Control section 101 transmits to right management section 1011 a request to update right X to which the playback start time, playback end time, remaining playback duration and the remaining number of playbacks stored in the above-described buffer memory are added (step S573). Upon receiving the request to update right X, right management section 1011 updates the remaining playback duration information, playback start and end time information and remaining playback number information of right X in music right management table 200 based on the added playback start time, playback end time, remaining playback duration and the remaining number of playbacks (step S574). Right management section 1011 transmits a right X updating completion report to control section 101 (step S575).

Next, upon receiving the right X updating completion report, control section 101 transmits a right X writing request to storage section 103 (step S576). Upon receiving the right X writing request, storage section 103 writes right data X into storage table 300 (step S577), and transmits a right X writing completion report to control section 101 (step S578). Upon receiving the right X writing completion report (step S579), control section 101 displays, when right X of the music data expires, a message indicating the expiration of the right on user I/F section 105 and the like (step S580) and ends this processing.

As described above, in the operation of playing back stored music data A based on the automatic playback mode, a playback is started even if it is proven that the right is invalid before the playback is started, or the playback is continued even when the remaining playback duration becomes 0 during the playback. The playback status is recorded as transmission information, and the transmission information is transmitted to the content provider after the playback of the music data is stopped or the playback ends.

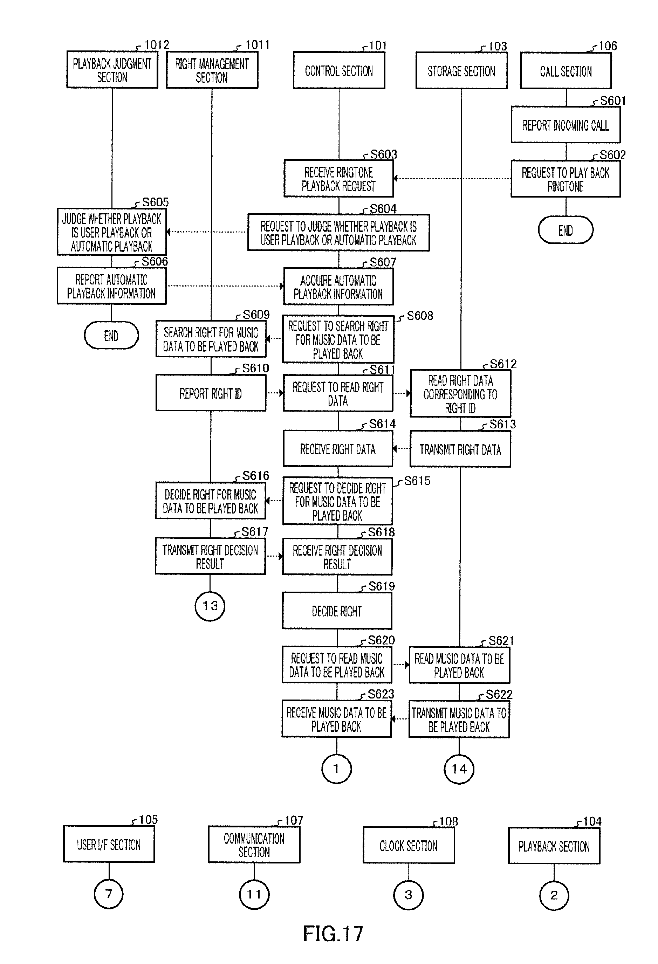

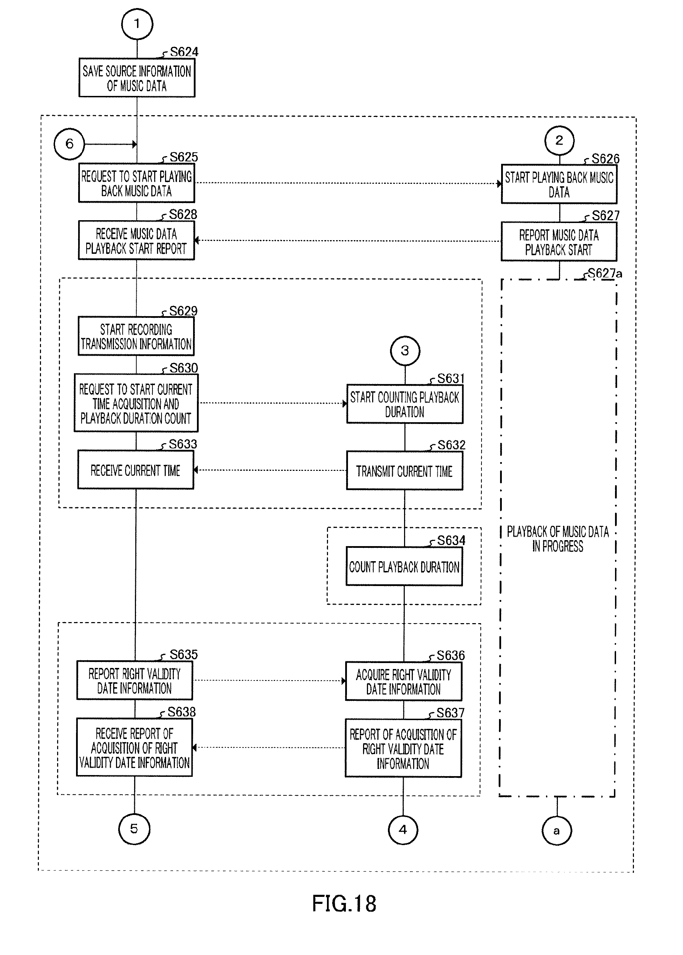

Next, the operation of mobile telephone 100 when the stored music data for which a validity date is set as playback restriction information, is played back based on the automatic playback mode, will be explained with reference to the flowcharts shown in FIG.17 to FIG.21. FIG.17 to FIG.21 are flowcharts showing the associated operations of the respective sections in mobile telephone 100 in the automatic playback mode. A case will be explained with these operations where a playback of music B in FIG.2 is requested by an incoming call. Although the flowcharts shown in FIG.17 to FIG.21 show operations of the respective sections as a series of operations, these flowcharts also include different playback stop operations (when the right is invalid upon the right decision, after the music data playback start is requested for the first time and when the right is valid upon the right decision, when the validity date expires, when user I/F section 105 receives an incoming call, when a validity date expiration report is not received and the right is valid upon the right decision and when recording of transmission information is started) which are not a series of operations.

In FIG. 17, upon receiving an incoming call report from a mobile telephone network (step S601), call section 106 transmits a ringtone playback request including music ID (music B) to be played back, to control section 101 first (step S602). Upon receiving the ringtone playback request including music ID (music B) (step S603), control section 101 reports a request to judge whether the playback is user playback or automatic playback, including the receivedringtoneplayback request, to playback judgment section 1012 (step S604).

Upon acquiring the request to judge whether the playback is user playback or automatic playback, playback judgment section 1012 judges that the mode is a user playback mode or an automatic playback mode based on the ringtone playback request included in the judgment request (step S605). In this case, it is a ringtone playback request, and therefore playback judgment section 1012 judges that the mode is an automatic playback mode, and reports automatic playback information to control section 101 (step S606).

Upon acquiring automatic playback information (step S607), control section 101 recognizes that the mode is an automatic playback mode. Next, control section 101 reports a request to search right ID corresponding to music ID (music B) specified upon reception of the ringtone playback request in step S603, to right management section 1011 (step S608). Upon acquiring the request to search right ID corresponding to music ID (music B), right management section 1011 searches right ID corresponding to music ID (music B) from music right management table 200 in FIG.2 (step S609), and transmits searched right ID (right Y) to control section 101 (step S610).

Upon acquiring right ID (right Y), control section 101 reports a request to read the right data corresponding to right ID (right Y), to storage section 103 (step S611). Upon acquiring the request to read the right data corresponding to right ID (right Y), storage section 103 reads right data Y corresponding to right ID (right Y) from storage table 300 (step S612), and transmits read right data Y to control section 101 (step S613). Upon receiving right data Y (step S614), control section 101 reports a request to decide right Y to right management section 1011 (step S615).

Upon acquiring the request to decide right Y, right management section 1011 decides whether right Y is valid or invalid (step S616) with reference to music right management table 200 in FIG.2, and transmits the right decision result (valid or invalid) to control section 101 (step S617). At this time, right management section 1011 transmits to control section 101 the right decision result to which playback restriction information of right Y (PT: six hours, PL: 05, 04, 10, 12:00 and PC: five times) and playback information (remaining playback duration, playback start and end time and the remaining number of playbacks) in music right management table 200 are added.

Upon receiving the right decision result (valid or invalid) including the playback restriction information and the playback information (step S618), control section 101 decides whether the right for the music data to be played back is valid or invalid (step S619). At this time, control section 101 temporarily stores the playback restriction information and the playback information added to the right decision result in the built-in buffer memory (not shown).

When the right is valid, control section 101 reports a request to read the music data corresponding to selected music B, to storage section 103 (step S620). Furthermore, even when the right is decided to be invalid upon right decision, the flow proceeds to step S620, and control section 101 starts subsequent playback of music data. The detailed operation when the right is invalid upon a right decision will be described later.

Upon acquiring the request to read the music data corresponding to music B, storage section 103 reads music data B corresponding to music B from storage table 300 (step S621), and transmits music data B to control section 101 (step S622). Upon receivingmusic data B (step S 623), control section 101 saves information of the source from which music data B is acquired, that is, address information and the like of the content provider, in the built-in buffer memory (not shown) (step S624).

Next, control section 101 transfers music data B to playback section 104 and reports a playback start request to playback section 104 (step S625). The processings in step S625 to step S650 are the processings until a music data playback stop request is transmitted from control section 101. These processings include a processing when the right is invalid upon a right decision (step S629 to step S633), a processing after the music data playback start is requested for the first time and also when the right is valid upon the right decision (step S635 to step S638) and a processing when the validity date expires (step S641 to step S647).

Upon receiving music data B and acquiring the playback start request (step S626), playback section 104 transmits a music data B playback start report to control section 101 (step S627). Hereinafter, playback section 104 starts a playback of music data B and enters a state of "playback of music data in progress" (step S627a). Control section 101 receives the music data B playback start report (step S628).

Next, the operation when the right is invalid upon the right decision in step S619 will be explained with reference to step S629 to step S633.

Even when the right is decided to be invalid upon the right decision in step S619, the playback of music data B is started through the above-described processings in step S620 to step S628, and the processings in step S629 to step S633 are executed after this playback start.

In this case, the playback of music data with an invalid right is started, and this violates the playback restriction set in the right data. Therefore, when starting the playback of music data with an invalid right, mobile telephone 100 according to this embodiment records the playback start time, playback duration and the playback end time, which will be described later, of the music data as the transmission information to be transmitted to the content provider. The content provider receives the transmission information from mobile telephone 100, and can thereby bill the user who plays back music data with an expired right.

Control section 101 starts recording the transmission information (step S629), and transmits the current time acquisition and playback duration count start request to clock section 108 (step S630). Upon receiving the current time acquisition and playback duration count start request, clock section 108 starts a playback duration count (step S631), and transmits the current time information to control section 101 (step S632). Upon receiving the current time information (step S633), control section 101 stores the current time in the built-in buffer memory as the playback start time.

Through the above-described processings in step S629 to step S633, when a playback of music data with an invalid right is started, it is possible to store the playback start time and the playback duration which indicate a playback status of the music data.

Clock section 108 executes a playback duration count until a playback duration count stop request is inputted in response to a stop of the playback of music data B (step S634).

Next, theplaybackprocessingafterthemusicdata playback start is requested for the first time and when the right is valid upon a right decision, that is, the processing when the playback of music data B specified by the ringtone playback request received in above step S603 is the first time and when the right is valid upon the right decision in step S619, will be explained with reference to step S635 to step S638.

In above step S619, control section 101 reports the validity date information of right Y stored in the buffer memory, to clock section 108 (step S635). Upon acquiring the validity date information of right Y (step S636), clock section 108 transmits a report of acquisition of the validity date information of right Y, to control section 101 (step S637). Control section 101 receives the report of acquisition of the validity date information of right Y (step S638).

Through the above-described processings in step S635 to step S638, in the case of playback processing after the music data playback start is requested for the first time and when the right is valid upon the right decision, it is possible to manage the validity date of the music data at clock section 108.

Clock section 108 executes clock counting until a playback stop is inputted from control section 101 or the validity date expires (steps S639 and S640).

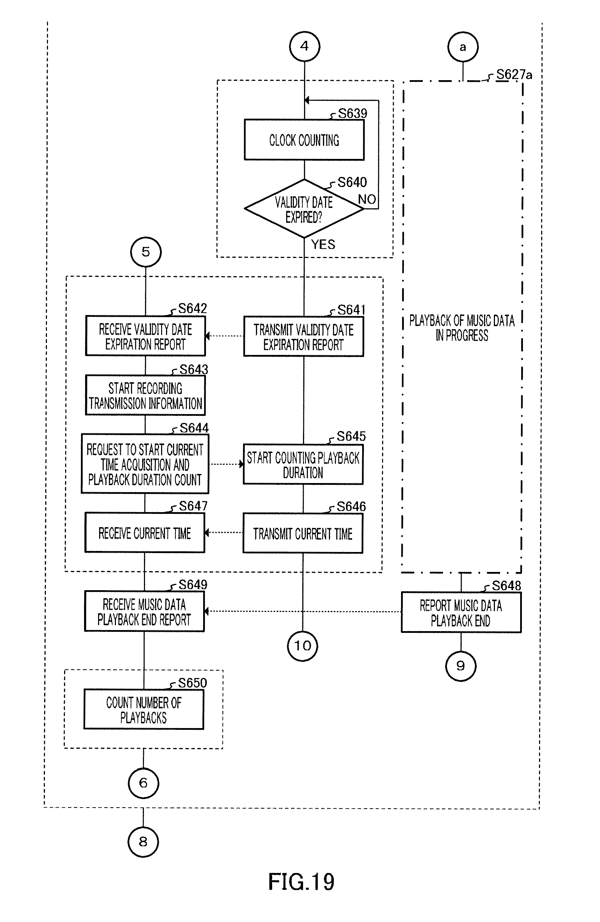

Next, the operation when the expiration of the validity date is reported from clock section 108 will be explained with reference to step S641 to step S647 in FIG.19.

Clock section 108 starts clock counting in above step S639 and, when judging that the validity date expires in step S640, transmits a validity date expiration report to control section 101 (step S641). Upon receiving the validity date expiration report (step S642), control section 101 starts recording of the above-described transmission information (step S643), and transmits a current time acquisition and playback duration count start request, to clock section 108 (step S644). Upon receiving the current time acquisition and playback duration count start request, clock section 108 starts counting the playback duration (step S645), and transmits the current time information to control section 101 (step S646). Upon receiving the current time information (step S647), control section 101 stores the current time in the built-in buffer memory as the playback start time.

Through the above-described processings in step S641 to step S647, when the expiration of the validity date is reported, it is possible to record the playback duration of music data during the playback even after the validity date expires.

Next, when the playback of music data B ends, playback section 104 transmits a music data B playback end report to control section 101 (step S648). Upon receiving the music data B playback end report (step S649), if recording of the transmission information is started, control section 101 increments the number of playbacks by 1 for the playback of this time (step S650), and the flow returns to step S625.

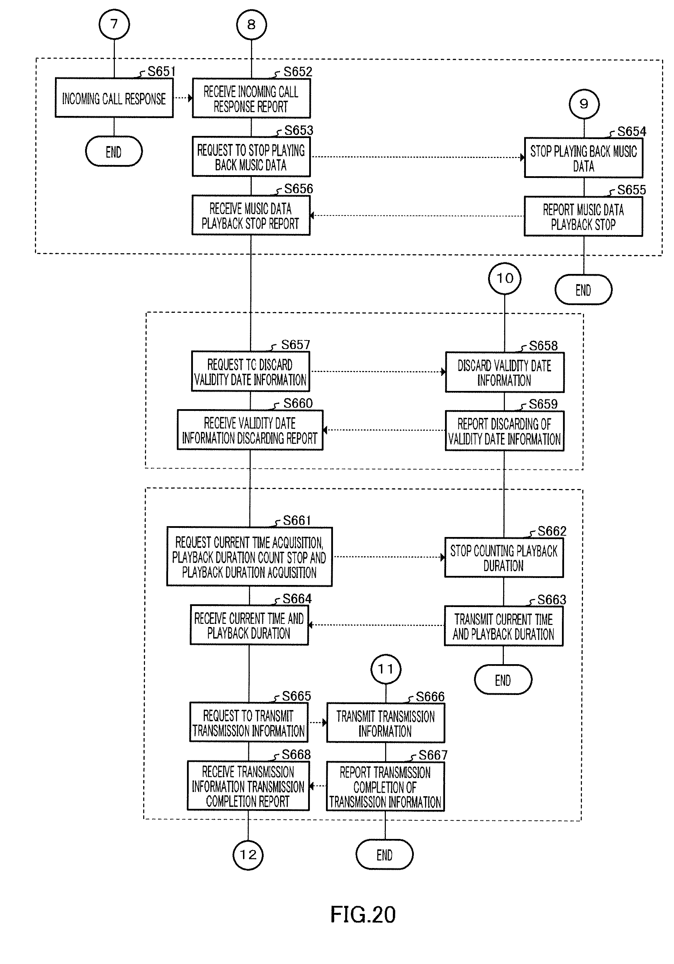

Next, the operation when the user receives an incoming call response at user I/F section 105 in response to the playback of a ringtone, will be explained with reference to step S651 to step S656 in FIG.20.

When the user who hears the ringtone performs an incoming call response operation at user I/F section 105, user I/F section 105 transmits an incoming call response report to control section 101 (step S651). Upon receiving the incoming call response report (step S652), control section 101 transmits a music data B playback stop request to playback section 104 (step S653). Upon receiving the music data B playback stop request, playback section 104 stops the playback of music data B (step S654), and transmits a music data B playback stop report to control section 101 (step S655). Control section 101 receives the music data B playback stop report (step S656).

Next, the operation when a validity date expiration report is not received and the right is valid upon the right decision, will be explained with reference to step S657 to step S660.

Control section 101 transmits a validity date information discarding request to clock section 108 (step S657). Upon receiving the validity date information discarding request, clock section 108 discards the validity date information (step S658), and transmits a validity date information discarding report to control section 101 (step S659). Control section 101 receives the validity date information discarding report (step S660).

Next, the operation when the recording of the transmission information is started upon the above-described music data playback start, will be explained with reference to step S661 to step S668.

Control section 101 transmits a current time acquisition, playback duration count stop and playback duration acquisition request to clock section 108 (step S661). Upon receiving the current time acquisition, playback duration count stop and playback duration acquisition request, clock section 108 stops counting the playback duration which has been started in step S631 (step S662), and transmits the current time information and playback duration information to control section 101 (step S663). Upon receiving the current time information and playback duration information (step S664), control section 101 stores the playback duration information in the buffer memory and stores the current time information in the buffer memory as the playback end time.

Control section 101 then sets the playback start time, playback end time, playback duration and the number of playbacks stored in the buffer memory and the user information of mobile telephone 100, in the transmission information, and transmits a request to transmit the transmission information to the content provider, to communication section 107 (step S665). Upon receiving the transmission information and the request to transmit the transmission information to the content provider, communication section 107 transmits the transmission information to the content provider (step S666), and transmits a transmission information transmission completion report to control section 101 (step S667). Control section 101 receives the transmission information transmission completion report (step S668).

Through the above-described processings in step S661 to step S668, when the right is invalid upon the right decision or when the validity date expires, it is possible to transmit the playback start time, playback end time, playback duration and the number of playbacks which indicate a playback status of the music data, to the content provider. After receiving the transmission information, the content provider can bill the user on the music data played back after the right expires based on the playback start time, playback end time, playback duration and the number of playbacks set in the transmission information and the user information.

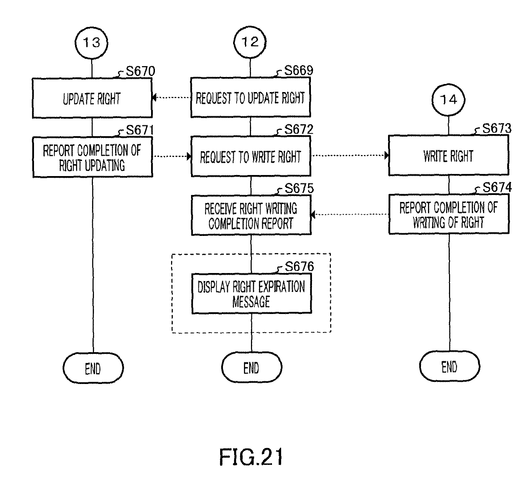

Next, the operations in and after step S669 in FIG.21 will be explained.

Control section 101 transmits to right management section 1011 a request to update right Y to which the playback start time, playback end time, remaining playback duration and the remaining number of playbacks stored in the above-described buffer memory are added (step S669). Upon receiving the request to update right Y, right management section 1011 updates the remaining playback duration information, playback start and end time information and remaining playback number information of right Y in music right management table 200 based on the added playback start time, playback end time, remaining playback duration and the remaining number of playbacks (step S670). Right management section 1011 transmits a right Y updating completion report to control section 101 (step S671).

Next, upon receiving the right Y updating completion report, control section 101 transmits a right Y writing request to storage section 103 (step S672). Upon receiving the right Y writing request, storage section 103 writes right data Y into storage table 300 (step S673), and transmits a right Y writing completion report to control section 101 (step S674). Upon receiving the right Y writing completion report (step S675), control section 101 displays, when right Y of the music data expires, a message indicating the expiration of the right on user I/F section 105 and the like (step S676) and ends this processing.

As described above, in the operation of playing back stored music data B for which the validity date is set, based on an automatic playback mode, the playback is started even if it is proven that the right is invalid before the playback is started, or the playback is continued even when the validity date expires during the playback. The playback status is recorded as transmission information, and the transmission information is transmitted to the content provider after the playback of the music data is stopped or the playback ends.

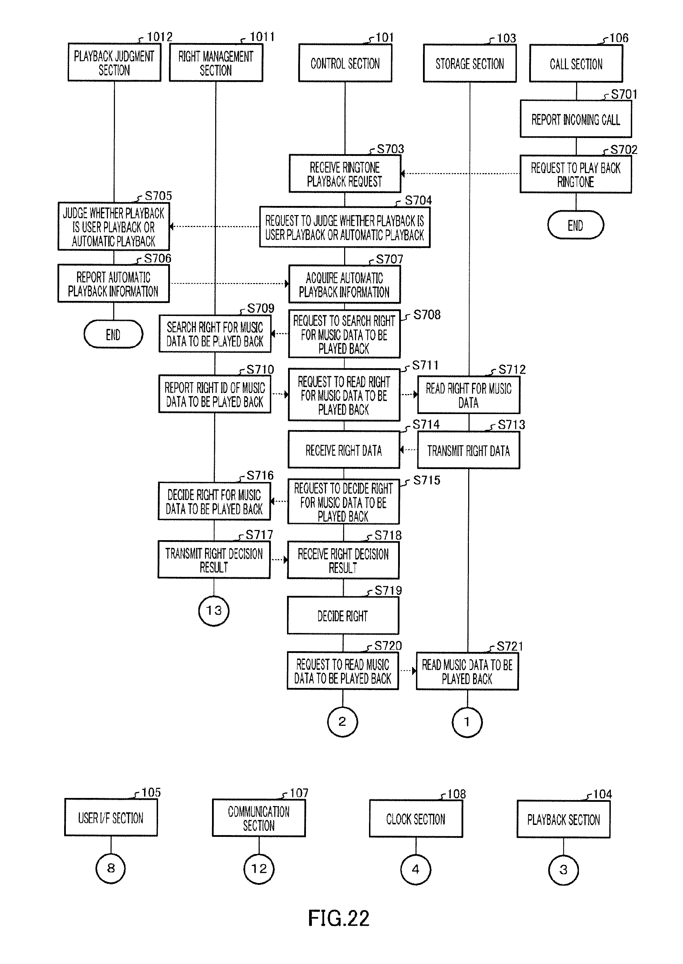

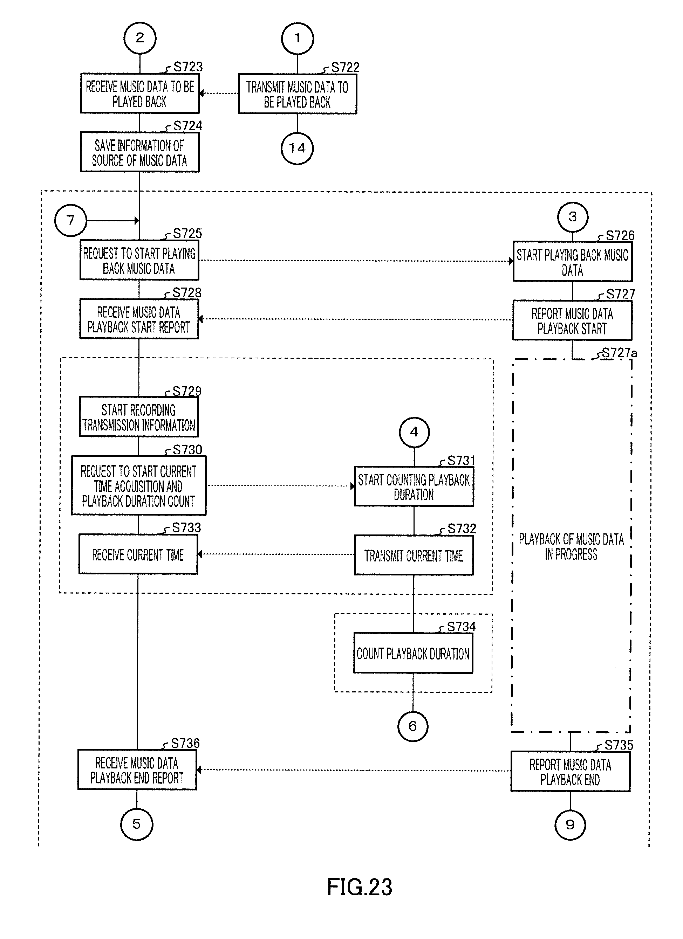

Next, the operation of mobile telephone 100 when the stored music data for which the number of playbacks is set as playback restriction information, is played back based on the automatic playback mode, will be explained with reference to FIG.22 to FIG.25. FIG.22 to FIG.25 are flowcharts showing the associated operations of the respective sections in mobile telephone 100 in the automatic playback mode. A case will be explained with these operations where the playback of music B in FIG.2 is requested by an incoming call. Furthermore, although the flowcharts shown in FIG.22 to FIG.25 show operations of the respective sections as a series of operations, these flowcharts also include different playback stop operations (when the right is invalid upon a right decision, when the number of playbacks expires, when user I/F section 105 receives an incoming call, and when recording of the transmission information is started) which are not a series of operations.

In FIG.22, upon receiving an incoming call report from the mobile telephone network first (step S701), call section 106 transmits a ringtone playback request including music ID (music B) to be played back, to control section 101 (step S702). Upon receiving the ringtone playback request including music ID (music B) (step S703), control section 101 reports a request to judge whether the playback is user playback or automatic playback, including the received ringtone playback request, to playback judgment section 1012 (step S704).

Upon acquiring the request to judge whether the playback is user playback or automatic playback, playback judgment section 1012 judges that the mode is a user playback mode or an automatic playback mode based on the ringtone playback request included in the judgment request (step S705). In this case, it is a ringtone playback request, and therefore playback judgment section 1012 judges that the mode is an automatic playback mode, and reports automatic playback information to control section 101 (step S706).

Upon acquiring the automatic playback information (step S707), control section 101 recognizes that the mode is an automatic playback mode. Next, control section 101 reports a request to search right ID corresponding to music ID (music B) specified upon reception of the ringtone playback request in step S703, to right management section 1011 (step S708). Upon acquiring the request to search right ID corresponding to music ID (music B), right management section 1011 searches right ID corresponding to music ID (music B) frommusic right management table 200 in FIG. 2 (step S709), and transmits searched right ID (right Y) to control section 101 (step S710).

Upon acquiring right ID (right Y), control section 101 reports a request to read the right data corresponding to right ID (right Y), to storage section 103 (step S711). Upon acquiring the request to read the right data corresponding to right ID (right Y), storage section 103 reads right data Y corresponding to right ID (right Y) from storage table 300 (step S712), and transmits read right data Y to control section 101 (step S713). Upon receiving right data Y (step S714), control section 101 reports a request to decide right Y, to right management section 1011 (step S715).

Upon acquiring the request to decide right Y, right management section 1011 decides whether right Y is valid or invalid (step S716) with reference to music right management table 200 in FIG.2, and transmits the right decision result (valid or invalid) to control section 101 (step S717). At this time, right management section 1011 transmits to control section 101 the right decision result to which the playback restriction information of right Y (PT: six hours, PL: 05, 04, 10, 12:00, and PC: five times) and playback information (remaining playback duration, playback start and end time and the remaining number of playbacks) in music right management table 200 are added.

Upon receiving the right decision result (valid or invalid) including the playback restriction information and the playback information (step S718), control section 101 decides whether the right for the music data to be played back is valid or invalid (step S719). At this time, control section 101 temporarily stores the playback restriction information and the playback information added to the right decision result in the built-in buffer memory (not shown).

When the right is valid, control section 101 reports a request to read music data corresponding to selected music B, to storage section 103 (step S720). Furthermore, also when the right is decided to be invalid upon the right decision, the flow proceeds to step S720, and control section 101 starts subsequent playback of music data. The detailed operation when the right is invalid upon the right decision will be described later.

Upon acquiring the request to read the music data corresponding to music B, storage section 103 reads music data B corresponding to music B from storage table 300 (step S721) and transmits music data B to control section 101 (step S722). Upon receiving music data B (step S723), control section 101 saves information of the source from which music data B is acquired, that is, address information of the content provider and the like, in the built-in buffer memory (not shown) (step S724).

Next, control section 101 transfers music data B to playback section 104 and also reports a playback start request to playback section 104 (step S725). The processings in step 725 to step S742 are processings until a music data playback stop request is transmitted from control section 101. These processings include processings when the right is invalid upon a right decision (step S729 to step S733) and processings when the number of playbacks expires (step S738 to step S742).

Upon receiving music data B and acquiring a playback start request (step S726), playback section 104 transmits a music data B playback start report to control section 101 (step S727). Hereinafter, playback section 104 starts the playback of music data B and enters a state of "playback of music data in progress" (step S727a). Control section 101 receives the music data B playback start report (step S728).

Next, an operation when the right is invalid upon the right decision in step S719 will be explained with reference to step S729 to step S733.

Even when the right is decided to be invalid upon the right decision in step S719, the playback of music data B is started through the above-described processings in step S725 to step S728, and after this playback start, the processings in step S729 to step S733 are executed.

In this case, the playback of the music data with an invalid right is started, and this violates the playback restriction set in the right data. Therefore, when starting a playback of the music data with an invalid right, mobile telephone 100 according to this embodiment records the playback start time, playback duration, playback end time, which will be described later, of the music data as transmission information to be transmitted to the content provider. The content provider receives the transmission information from mobile telephone 100, and can thereby bill the user who plays back the music data with the expired right.

Control section 101 starts recording the transmission information (step S729), and transmits a current time acquisition and playback duration count start request to clock section 108 (step S730). Upon receiving the current time acquisition and playback duration count start request, clock section 108 starts a playback duration count (step S731), and transmits the current time information to control section 101 (step S732). Upon receiving the current time information (step S733), control section 101 stores the current time in the built-in buffer memory as the playback start time.

Through the above-described processings in step S729 to step S733, when a playback of the music data with the invalid right is started, it is possible to store the playback start time and the playback duration which indicate a playback status of the music data.

Clock section 108 executes a playback duration count until a playback duration count stop request is inputted in response to a playback stop of music data B (step S734).

Next, when the playback of music data B ends, playback section 104 transmits a music data B playback end report to control section 101 (step S735). Upon receiving the music data B playback end report (step S736), control section 101 increments the number of playbacks by 1 for the playback of this time (step S737).

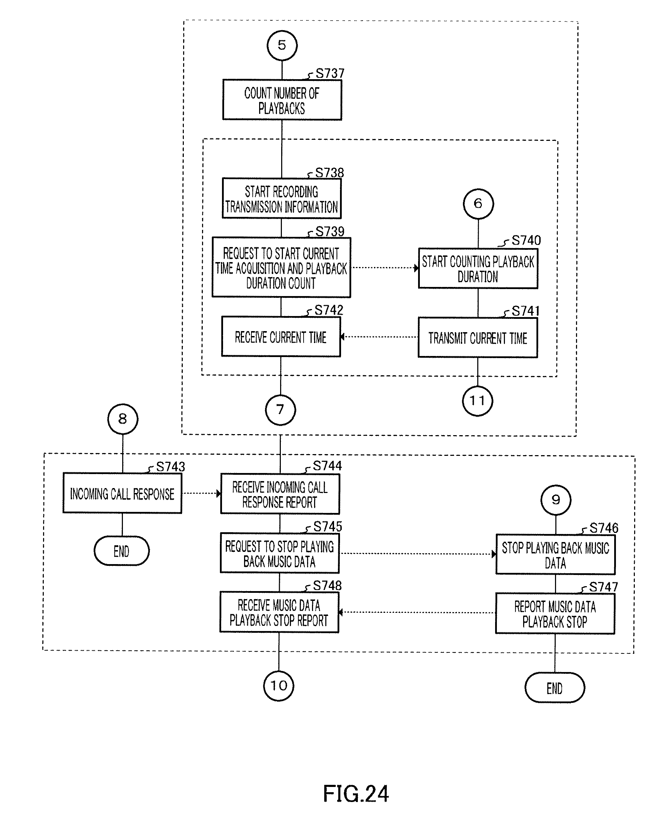

Next, an operation when the number of playbacks expires will be explained with reference to step S738 to step S742 in FIG.24.

Upon recognizing that the number of playbacks expires, control section 101 starts recording the above-described transmission information (step S738), and transmits a current time acquisition and playback duration count start request to clock section 108 (step S739). Upon receiving the current time acquisition and playback duration count start request, clock section 108 starts counting the playback duration (step S740), and transmits the current time information to control section 101 (step S741). Upon receiving the current time information (step S742), control section 101 stores the current time in the built-in buffer memory as the playback start time, and the flow returns to step S725.

When the number of playbacks expires through the above-described processings in step S738 to step S742, it is possible to record the playback duration of the music data during the playback even after the number of playbacks expires.

Next, the operation when the user receives an incoming call response at user I/F section 105 in response to the playback of a ringtone, will be explained with reference to step S743 to step S748 in FIG.24.

When the user who hears a ringtone performs an incoming call response operation at user I/F section 105, user I/F section 105 transmits an incoming call response report to control section 101 (step S743). Upon receiving the incoming call response report (step S744), control section 101 transmits a music data B playback stop request to playback section 104 (step S745). Upon receiving the music data B playback stop request, playback section 104 stops the playback of music data B (step S746), and transmits a music data B playback stop report to control section 101 (step S747). Control section 101 receives the music data B playback stop report (step S748).

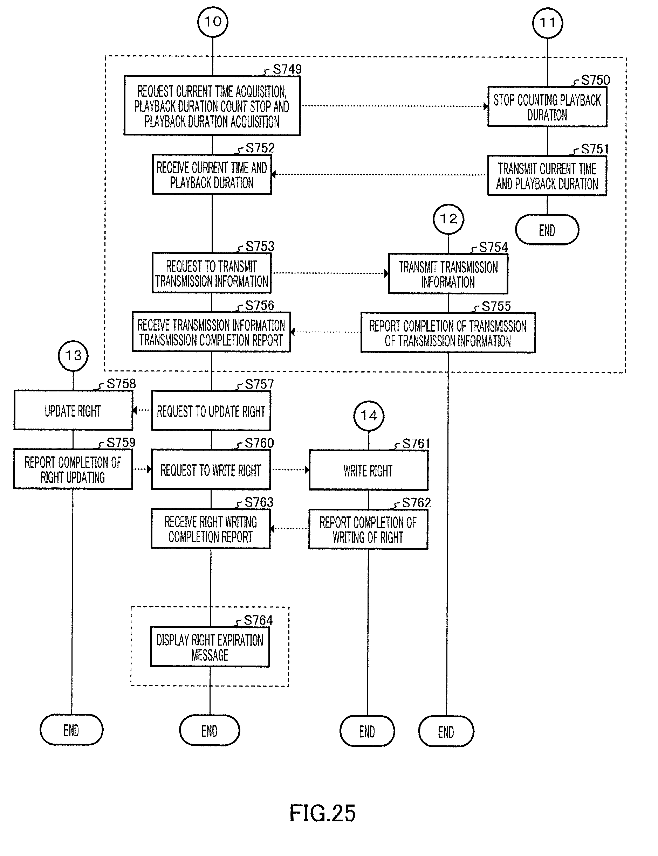

Next, an operation when recording of the transmission information is started upon the above-described music data playback start, will be explained with reference to step S749 to step S756 in FIG.25.

Control section 101 transmits a current time acquisition, playback duration count stop and playback duration acquisition request to clock section 108 (step S749). Upon receiving the current time acquisition, playback duration count stop and playback duration acquisition request, clock section 108 stops counting the playback duration which has been started in step S731 (step S750), and transmits the current time information and playback duration information to control section 101 (step S751). Upon receiving the current time information and playback duration information (step S752), control section 101 stores the playback duration information in the buffer memory and also stores the current time information in the buffer memory as the playback end time.

Control section 101 then sets the playback start time, playback end time, playback duration and the number of playbacks stored in the buffer memory and the user information of mobile telephone 100, in the transmission information, and transmits a request to transmit the transmission information to the content provider, to communication section 107 (step S753). Upon receiving the transmission information and the request to transmit the transmission information to the content provider, communication section 107 transmits the transmission information to the content provider (step S754), and transmits a transmission information transmission completion report to control section 101 (step S755). Control section 101 receives the transmission information transmission completion report (step S756).

Through the above-described processings in step S749 to step S756, when the right is invalid upon the right decision or when the number of playbacks expires, it is possible to transmit the playback start time, playback end time, playback duration and the number of playbacks which indicate a playback status of the music data, to the content provider. After receiving the transmission information, the content provider can bill the user on the music data played back after the right expires based on the playback start time, playback end time, playback duration and the number of playbacks set in the transmission information and the user information.

Next, the operation in and after step S757 in FIG.25 will be explained.

Control section 101 transmits a request to update right Y to which the playback start time, playback end time, remaining playback duration and the remaining number of playbacks stored in the above-described buffer memory are added, to right management section 1011 (step S757). Upon receiving the request to update right Y, right management section 1011 updates the remaining playback duration information, playback start and end time information and remaining playback number information of right Y in music right management table 200 based on the added playback start time, playback end time, remaining playback duration and the remaining number of playbacks (step S758). Right management section 1011 transmits a right Y updating completion report to control section 101 (step S759).

Next, upon receiving the right Y updating completion report, control section 101 transmits a right Y writing request to storage section 103 (step S760). Upon receiving the right Y writing request, storage section 103 writes right data Y into storage table 300 (step S761), and transmits a right Y writing completion report to control section 101 (step S762). Upon receiving the right Y writing completion report (step S763), when right Y of music data B expires, control section 101 displays a message indicating the expiration of the right on user I/F section 105 and the like (step S764) and ends this processing.

As described above, in the operation of playing back stored music data B for which the number of playbacks is restricted, based on the automatic playback mode, the playback is started even if it is proven that the right is invalid before the playback is started, or the playback is continued even when the number of playbacks expires during the playback. The playback status is recorded as the transmission information, and transmission information is transmitted to the content provider after the playback of the music data is stopped or the playback ends.

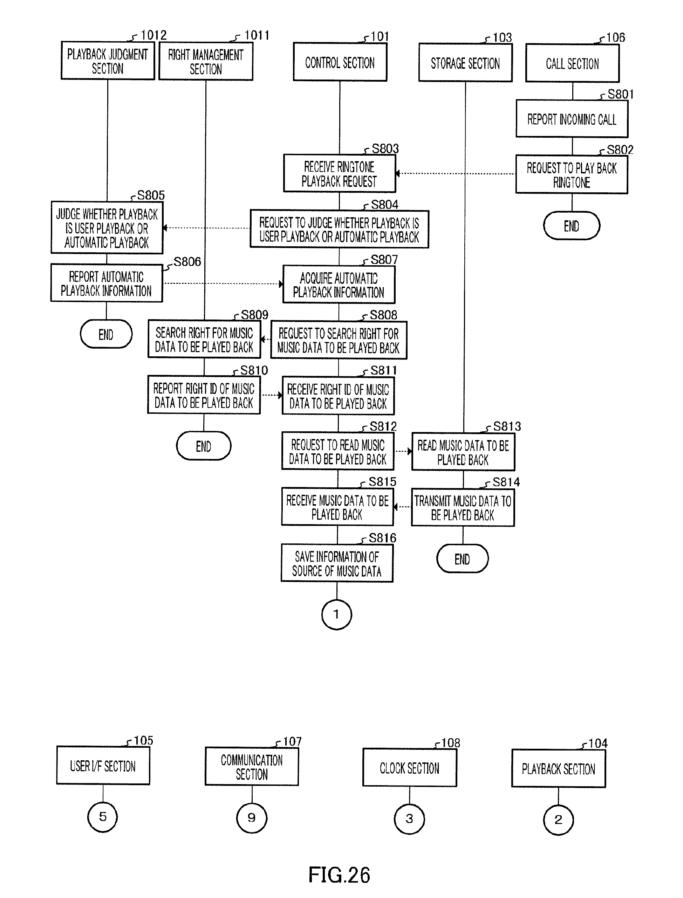

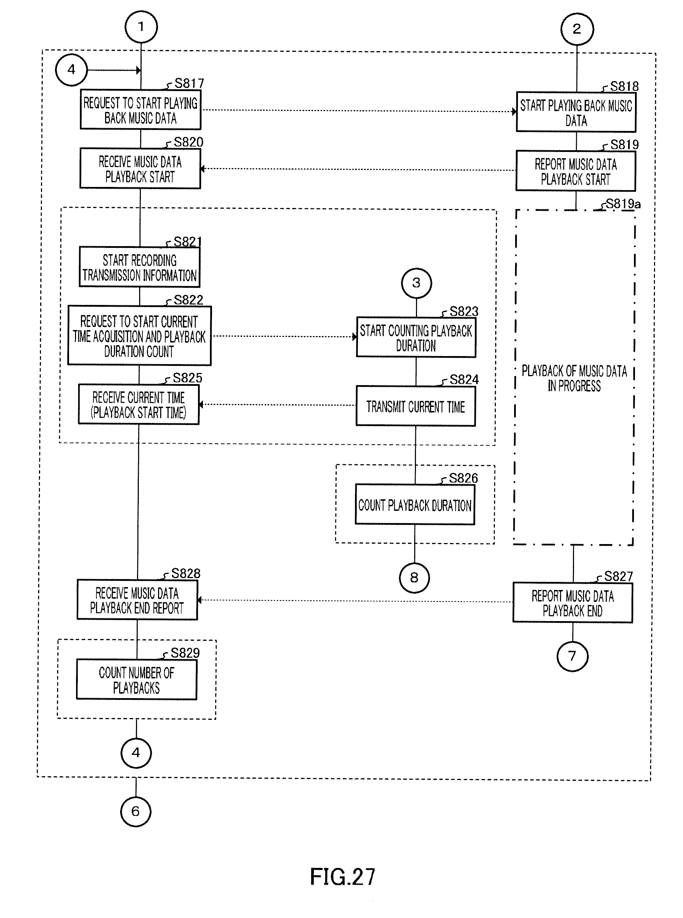

Next, an operation of mobile telephone 100 when the stored music data without valid right is played back based on the automatic playback mode, will be explained with reference to the flowcharts shown in FIG.26 to FIG.28. A case will be explained with these operations where a playback of music B in FIG.2 is requested in response to an incoming call. Furthermore, although the flowcharts shown in FIG.26 to FIG.28 show operations of the respective sections as a series of operations, these flowcharts also include different playback stop operations (after music data playback start is requested for the first time, and when user I/F section 105 receives an incoming call) which are not a series of operations.

In FIG.26, upon receiving an incoming call report from the mobile telephone network (step S801), call section 106 transmits a ringtone playback request including music ID (music B) to be played back, to control section 101 (step S802). Upon receiving the ringtone playback request includingmusic ID (music B) (step S803), control section 101 reports a request to judge whether the playback is user playback or automatic playback, including the received ringtone playback request, to playback judgment section 1012 (step S804).

Upon acquiring the request to judge whether the playback is user playback or automatic playback, playback judgment section 1012 judges that the mode is a user playback mode or an automatic playback mode based on the ringtone playback request included in the judgment request (step S805). In this case, the request is a ringtone playback request, and therefore playback judgment section 1012 judges that the mode is an automatic playbackmode, and reports automatic playback information to control section 101 (step S806).

Upon acquiring the automatic playback information (step S807), control section 101 recognizes that the mode is an automatic playback mode. Next, control section 101 reports a request to search right ID corresponding to music ID (music B) specified upon reception of the ringtone playback request in step S803, to right management section 1011 (step S808). Upon acquiring the request to search right ID corresponding to music ID (music B), right management section 1011 searches right ID corresponding to music ID (music B) frommusic right management table 200 in FIG.2 (step S809), and reports right ID (right Y) including the searched right decision result (invalid) to control section 101 (step S810).

Upon acquiring right ID (right Y) including the right decision result (invalid) (step S811), control section 101 recognizes that right Y of music B is invalid, and reports a request to read music data corresponding to music B, to storage section 103 (step S812). Upon acquiring the request to read music data corresponding to music B, storage section 103 reads music data B corresponding to music B from storage table 300 (step S813), and transmits music data B to control section 101 (step S814). Upon receiving music data B (step S815), control section 101 saves information of the source from which music data B is acquired, that is, address information of the content provider and the like, in the built-in buffer memory (not shown) (step S816).

Next, control section 101 transfers music data B to playback section 104 and also reports a playback start request to playback section 104 (step S817). The processings in step 817 to step S829 are processings until a music data playback stop request is transmitted from control section 101. These processings include a case after music data playback start is requested for the first time (step S821 to step S825).

Upon receiving music data B and acquiring the playback start request (step S818), playback section 104 transmits a music data B playback start report to control section 101 (step S819). Hereinafter, playback section 104 starts a playback of music data B and enters a state of "playback of music data in progress" (step S819a). Control section 101 receives the music data B playback start report (step S820).

Next, theplaybackprocessingafterthemusicdata playback start is requested for the first time, that is, the processing when the playback of music data B specified by the ringtone playback request received in above step S803 is the first time, will be explained with reference to step S821 to step S825.

Control section 101 starts recording the above-described transmission information (step S821), and transmits a current time acquisition and playback duration count start request to clock section 108 (step S822). Upon receiving the current time acquisition and playback duration count start request, clock section 108 starts counting the playback duration (step S823), and transmits the current time information to control section 101 (step S824). Upon receiving the current time information (step S825), control section 101 stores the current time in the built-in buffer memory as the playback start time.

Through the above-described processings in step S821 to step S825, in the case of playback processing in the case after the music data playback start is requested for the first time, it is possible to start counting the playback start time and the playback duration of the music data.

When the counting of the playback duration is started through the playback processing in the case after the music data playback start is requested for the first time, clock section 108 executes counting of the playback duration until a playback stop is inputted from control section 101 (step S826).

Next, when the playback of music data B ends, playback section 104 transmits a music data B playback end report to control section 101 (step S827). Upon receiving the music data B playback end report (step S828), control section 101 increments the number of playbacks by 1 for the playback of this time (step S829) when recording of the transmission information is started, and the flow returns to step S817.

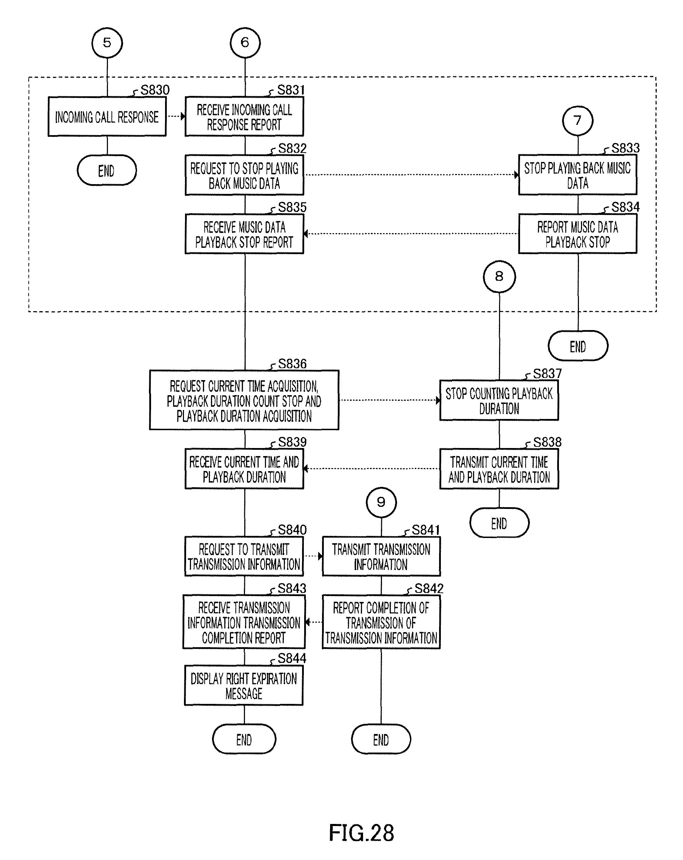

Next, an operation when the user receives an incoming call response at user I/F section 105 in response to the playback of a ringtone, will be explained with reference to step S830 to step S835 in FIG.28.

When the user who hears a ringtone performs an incoming call response operation at user I/F section 105, user I/F section 105 transmits an incoming call response report to control section 101 (step S830). Upon receiving the incoming call response report (step S831), control section 101 transmits a music data B playback stop request to playback section 104 (step S832). Upon receiving the music data B playback stop request, playback section 104 stops the playback of music data B (step S833), and transmits a music data B playback stop report to control section 101 (step S834). Control section 101 receives the music data B playback stop report (step S835).

Next, control section 101 transmits a current time acquisition, playback duration count stop and playback duration information acquisition request to clock section 108 (step S836). Upon receiving the current time acquisition, playback duration count stop and playback duration information acquisition request, clock section 108 stops counting the playback duration (step S837), and transmits the current time information and playback duration information to control section 101 (step S838). Upon receiving the current time information and playback duration information (step S839), control section 101 stores the playback duration information in the built-in buffer memory and stores the current time in the buffer memory as the playback end time.

Next, control section 101 sets the playback start time, playback end time, playback duration and the number of playbacks stored in the buffer memory and the user information of mobile telephone 100, in the transmission information, and transmits a request to transmit the transmission information to the content provider, to communication section 107 (step S840). Upon receiving the transmission information and the request to transmit the transmission information to the content provider, communication section 107 transmits the transmission information to the content provider (step S841) and transmits a transmission information transmission completion report to control section 101 (step S842). Upon receiving the transmission information transmission completion report (step S843), control section 101 displays, when right Y of music data B expires, a message indicating the expiration of the right on user I/F section 105 and the like (step S844) and ends this processing.

As described above, in the operation of playing back stored music data B without valid right based on the automatic playback mode, a playback is started, the playback start time, playback end time, playback duration and the number of playbacks are recorded as the transmission information, and the transmission information is transmitted to the content provider after the playback of the music data is stopped or the playback ends. Therefore, after receiving the transmission information, the content provider can bill the user on the music data played back after the right expires based on the playback start time, playback end time, playback duration and the number of playbacks set in the transmission information and the user information, and thereby prevent loss due to illegal usage of the music data.

Furthermore, in each operation based on the above-described automatic playback mode, preset music data is played back even when the right expires or the range of playback restriction is exceeded during a playback, so that the user can reliably recognize the schedule, incoming call, alarm time and the like.

In each operation based on the above-described automatic playback mode, although the transmission information is transmitted with user information added thereto, user information may also be encrypted to prevent illegal use caused by leakage of user information to a third party. For example, when the user of a mobile telephone registers the user information in the content provider, it is also possible to register key information obtained by encrypting signature information, and encrypt the user information using this key information. In this case, the content provider decodes the user information added to the transmission information using the key information on the provider side, and can thereby prevent illegal use of the user information. As a result, the safety and the reliability of a distribution service of content such as music data can be improved. Furthermore, although a case has been described with the above-described embodiment where the destination of transmission information which is playback information, is the content provider which is a provider of the content, the destination of transmission information is not limited to this, and any equipment can be used if equipment manages playback information.

The present application is based on Japanese Patent Application No. 2005-159718, filed on May 31, 2005, the entire content of which is expressly incorporated by reference herein.

### Industrial Applicability

The present invention prevents, when a right for a content becomes invalid before starting a playback or during the playback, the user from feeling a sense of incongruity by continuing the playback, allows the provider to bill the user by recording the playback information of the content for which the right expires, and transmitting the playback information to the provider, and is suitable for use in a data processing apparatus and the like which performs processing on data including right data relating to handling of digital content in an electronic apparatus such as a mobile information terminal and mobile telephone apparatus.

## Claims

1. A data processing apparatus that performs processing on data including right data relating to content, the apparatus comprising:
a storage section that stores content distributed from a provider and right data including playback restriction information corresponding to the content;
a playback section that performs playback processing of the stored content;
a right management section that manages the playback restriction information in association with validity or invalidity information of the right data;
a control section that decides whether the right data corresponding to the content is valid or invalid at the right management section upon a content playback request, controls playback processing of the playback section and records the playback information of the content after the right data decision; and
a communication section that transmits the playback information to the provider.

2. The data processing apparatus according to claim 1, wherein, when corresponding right data is decided to be valid upon the content playback request, the control section starts playback processing of the content at the playback section and decides whether the right data is valid or invalid during the playback processing of the content based on the playback restriction information.

3. The data processing apparatus according to claim 2, wherein, when the right data is decided to become invalid during the playback processing of the content, the control section continues the playback processing and records playback information relating to the playback processing.

4. The data processing apparatus according to claim 1, wherein, when the corresponding right data is decided to be invalid upon the content playback request, the control section starts the playback processing of the content at the playback section and records playback information relating to the playback processing during the playback processing of the content.

5. The data processing apparatus according to claim 1, wherein:
when the playback restriction information restricts playback duration of the content, the control section records remaining playback duration of the content during the playback processing as the playback information; and
the right management section manages the remaining playback duration information together with the playback restriction information.

6. The data processing apparatus according to claim 1, wherein:
when the playback restriction information sets a validity date of the content, the control section records a playback start time and a playback end time of the content as the playback information; and
the right management section manages the playback start time information and playback end time information together with the playback restriction information.

7. The data processing apparatus according to claim 1, wherein:
when the playback restriction information restricts a number of playbacks of the content, the control section records the number of playbacks of the content as the playback information; and
the right management section manages the playback number information together with the playback restriction information.

8. The data processing apparatus according to claim 1, wherein the control section starts recording of the playback information from a time when the right data is decided to be invalid.

9. The data processing apparatus according to claim 1, further comprising a time section,
wherein the control section controls the time section and records the playback information.
